# EUROPÄISCHE PATENTSCHRIFT

(11) **EP 0 827 439 B1**
(45) Veröffentlichungstag und Bekanntmachung des Hinweises auf die Patenterteilung: **16.06.1999**
(21) Anmeldenummer: 96914898.0
(22) Anmeldetag: 11.04.1996
(51) Int. Cl.: B23Q 7/14, B27B 5/07, E04B 2/86

(54) **VERFAHREN UND ANLAGE ZUR HERSTELLUNG VON BAUTEILEN**
METHOD AND FACILITY FOR MANUFACTURING PREFABRICATED ELEMENTS
PROCEDE ET INSTALLATION POUR LA FABRICATION D'ELEMENTS DE CONSTRUCTION

(30) Priorität: 20.05.1995 DE 19518654
(43) Veröffentlichungstag der Anmeldung: 11.03.1998
(73) Patentinhaber: Schenk Werkzeug- und Maschinenbau Gmbh, 73550 Waldstetten (DE); Kunz GmbH & Co., D-74417 Gschwend (DE)
(72) Erfinder: WINDEISEN, Joachim, D-73525 Schwäbisch Gmünd (DE); SCHNABEL, Wolfgang, D-73563 Mögglingen (DE)
(74) Vertreter: Patentanwälte Ruff, Beier, Schöndorf und Mütschele
(86) Internationale Anmeldenummer: EP9601543
(87) Internationale Veröffentlichungsnummer: WO9636458

(56) Entgegenhaltungen:
- EP-A- 0 164 330
- EP-A- 0 472 979
- FR-A- 2 612 826
- US-A- 4 130 788
- US-A- 4 181 054
- US-A- 4 634 359
- US-A- 5 369 930
- PATENT ABSTRACTS OF JAPAN vol. 017, no. 385 (M-1448), 20.Juli 1993 & JP,A,05 069274 (FANUC LTD), 23.März 1993,

## Beschreibung

Die Erfindung betrifft ein Verfahren und eine Anlage zur Herstellung von Bauteilen aus Einzelplatten und Abstandhaltern, insbesondere Holzwerkstoffplatten.

Bei den Bauteilen kann es sich insbesondere um Wandteile und/oder Deckenteile handeln, die als vorgefertigte Teile auf Baustellen eingesetzt werden, um kostengünstig und schnell Bauten, insbesondere in Leichtbauweise, herstellen zu können. Bevorzugt finden solche Bauteile bei der Technik der "verlorenen Schalungen" Verwendung. Es wird eine möglichst variable Gestaltbarkeit der Bauteile gefordert, gleichzeitig sollen die Bauteile steigenden technischen Anforderungen genügen und darüber hinaus auch ästhetisch ansprechende Bauten ermöglichen.

Es ist Aufgabe der Erfindung, ein Verfahren und eine Anlage zu schaffen, mit denen die obigen, bisher nicht gleichzeitig erfüllbaren Forderungen erfüllt werden können. Insbesondere soll die Möglichkeit einer weitgehenden Automatisierung der Herstellung der Bauteile bei gleichzeitig höchstmöglicher Variabilität geschaffen werden.

Diese Aufgabe wird gelöst durch ein Verfahren nach Anspruch 1 und eine Anlage nach Anspruch 14. Bevorzugte Ausführungen des Verfahrens und der Anlage sind in den abhängigen Ansprüchen 2 bis 13 bzw. 15 bis 39 beschrieben.

Die Erfindung schlägt zur Herstellung von Bauteilen, insbesondere Wand- oder Deckenteilen, aus Einzelplatten, insbesondere Holzwerkstoffplatten, ein Verfahren vor, bei dem mindestens eine Schnittfläche an mindestens einer vorgegebenen Einzelplatte nach Vorgabe mittels einer über mehrere Parameter computergesteuert bewegbaren Säge- und Fräsvorrichtung erzeugt wird, wobei bzgl. eines Koordinatensystems mit
x: erste Richtung parallel zu einer Plattenoberfläche;
y: zweite Richtung parallel zur Plattenoberfläche und senkrecht zur ersten Richtung;
z: dritte Richtung senkrecht zur Plattenoberfläche;
   nach Maßgabe folgender Parameter gesteuert wird:
A: (x,y)-Koordinaten des Anfangspunktes einer Schnittlinie zwischen Schnittfläche und Plattenoberfläche
E: (x,y)-Koordinaten des Endpunktes der Schnittlinie zwischen Schnittfläche und Plattenoberfläche;
N: (x,y,z)-Koordinaten einer Schnittflächennormalen.

Das Verfahren sieht weiterhin vor, daß Abstandhalterteile mittels einer programmgesteuerten Bestückungsvorrichtung an der Einzelplatte nach einer nach Vorgabe erfolgenden Verteilung derart befestigt werden können, daß einander zuordenbare, mit Abstandhalterteilen versehene Einzelplatten unter Verbindung einander entsprechender komplementärer Abstandhalterteile zusammensetzbar sind. Es sind beispielsweise Bewehrungen wie Bewehrungsmatten oder Gitterträger an einer Einzelplatte festlegbar oder es können beispielsweise zwei Einzelplatten bei geeigneter Ausführung von Abstandhalterteilen mit definiertem Abstand zueinander zu einer Schalung, insbesondere einer sog. verlorenen Schale, zusammengesetzt werden. Es ist möglich, daß zunächst die Befestigung der Abstandhalterteile erfolgt und danach die Erzeugung der Schnittflächen. Bevorzugt ist es, wenn zunächst die Erzeugung der Schnittflächen und danach die Befestigung der Abstandhalterteile erfolgt.

Durch das Verfahren wird es möglich, an der Einzelplatte mindestens eine nach Größe und Orientierung beliebig vorgebbare Schnittfläche zu erzeugen. Eine Fräsvorrichtung, die derartige Schnittflächen an Einzelplatten erzeugen kann, ist aus der EP-A-0 472 979 bekannt. Als Schnittfläche wird hier eine durch ein Bearbeitungswerkzeug, nämlich ein Sägewerkzeug und/oder ein Fräswerkzeug, erzeugbare Oberfläche bezeichnet. Diese kann sowohl eben, als auch gekrümmt sein. Der Abstand zwischen dem Anfangspunkt A und dem Endpunkt E wird als Schnittlänge bezeichnet, die beispielsweise die Kantenlänge von Fensterausschnitten oder dergleichen festlegt. Es ist durch das Verfahren möglich, individuell gestaltete Einzelplatten bereitzustellen, wobei es die Herstellung nach Vorgabe erlaubt, die Einzelplatten exakt und reproduzierbar in vorbestimmter Ausführung zu fertigen.

Durch das Verfahren können beliebige Schnittflächen und dementsprechend beliebig zugeschnittene Einzelplatten, insbesondere mit verschiedenen Ausschnitten, hergestellt werden. Derartige Ausschnitte sind beispielsweise für Fenster und/oder Türen vorgesehen, wobei im Fall der Berücksichtigung von Türen am unteren Ende der Platte ein Rand belassen werden kann, der für die spätere Einbringung des Bodens im Bauwerk von Nutzen ist. Weiterhin können Ausschnitte für die sog. Haustechnik, beispielsweise für Lüftungen, Leerrohre, Rohre, Verteilerdosen oder dergleichen vorhanden sein. Diese beispielhafte Aufzählung der Ausschnitte ist selbstverständlich nicht abschließend.

Bei dem Verfahren kann die Schnittiefe, die bei Eintauchen eines Bearbeitungswerkzeuges erreicht wird, fest vorgebbar sein, indem ein Bearbeitungswerkzeug um eine fest vorgebbare, der Dicke der Einzelplatte anpaßbare Strecke eingetaucht wird. Diese kann so gewählt sein, daß bei maximal zu erwartender Schrägstellung der Schnittfläche diese die Einzelplatte gerade vollständig von der dem Werkzeug zugewandten Plattenoberfläche bis zur Plattenrückseite durchläuft. Bevorzugt ist es, wenn bei dem Verfahren zusätzlich nach Maßgabe eines weiteren Parameters gesteuert wird, nämlich
T: Betrag eines in der Schnittfläche senkrecht zur Schnittlinie A-E verlaufenden Schnittiefenvektors.
Damit kann die Schnittiefe der Schrägstellung der Schnittfläche angepaßt werden und es kann erreicht werden, daß ein Bearbeitungswerkzeug praktisch nicht in einen hinter der Einzelplatte liegenden Bereich eindringt.

Vorzugsweise handelt es sich bei der im erfindungsgemäßen Verfahren benutzten Vorgabe um eine CAD-Vorgabe. Dadurch kann beispielsweise ein Bauplan für die Einzelplatten CAD-unterstützt erstellt und vorbereitet werden. Dieser Bauplan enthält insbesondere, bezogen auf die Einzelplatte, die genaue Position der Schnittflächen, insbesondere für die vorzusehenden Ausschnitte, sowie ggf. zusätzlich die genaue Position der Abstandhalterteile, die beispielsweise nach statischen Gesichtspunkten auf der Einzelplatte verteilt werden. Darüberhinaus ermöglicht es die CAD-Unterstützung, bzgl. der Gestaltung der Einzelplatten, aber auch bzgl. der Eigenschaften des für die Einzelplatte gewählten Materials, Daten zu gewinnen und/oder zu speichern, die in nachfolgenden Verfahrensschritten oder bei erneuter Durchführung des Verfahrens zur Optimierung des zu erstellenden Bauteils verwendbar sind.

Die Orientierung der Einzelplatte kann grundsätzlich beliebig sein, also sowohl horizontal, als auch senkrecht. Es hat sich als vorteilhaft herausgestellt, wenn die Einzelplatte gegenüber der Senkrechten geneigt gehalten wird. Der Neigungswinkel zwischen der Senkrechten und der x-y-Ebene kann vorzugsweise zwischen 1 und 25°, insbesondere zwischen 5 und 15° liegen. Vorzugsweise liegt er bei etwa 10°. Durch die Neigung kann die Einzelplatte ohne zusätzliche Haltemittel auf einer Auflage allein durch ihr Eigengewicht gehalten sein. Es können auch zusätzliche Haltemittel, wie Klemmittel, vorgesehen sein. Insbesondere bei geneigter oder vertikaler Einzelplatte kann diese mit ihrer Unterseite auch auf Lagerelementen, wie beispielsweise Lagerrollen, gelagert sein.

Es ist denkbar, daß bei der Erzeugung einer Schnittfläche ein Bearbeitungswerkzeug in einen Störbereich eindringt, in dem es beispielsweise Lagerelemente oder dergleichen berühren würde. Um dies zu vermeiden, ist es nach dem Verfahren der Erfindung möglich, daß bei der Erzeugung der Schnittfläche Störbereiche, beispielsweise die Bereiche von Lagerelementen für die Einzelplatte, derart berücksichtigt werden, daß bei Verlauf der zu erzeugenden Schnittfläche durch einen Störbereich die Einzelplatte relativ zu dem Störbereich, vorzugsweise parallel zur x-y-Ebene, verschoben wird und daß die Verschiebung durch eine entsprechende Verschiebung eines Koordinaten-Bezugspunktes für die Parameter berücksichtigt wird. Die Erzeugung der Schnittfläche kann dann außerhalb des Störbereiches erfolgen. Es ist auch möglich, durch konstruktive Mittel, beispielsweise Anschläge für die die Werkzeuge tragende Säge- und Fräsvorrichtung, eine "Ausblendung" der Störbereiche zu erreichen.

Wie bereits angedeutet, kann es grundsätzlich von Vorteil sein, wenn beim Zuschneiden der Einzelplatten tiefer geschnitten wird als der Plattenstärke entspricht. Auf diese Weise kann nämlich eine bestimmte Schnittiefe (vor-)eingestellt werden, die für alle auszuführenden Schnitte bei einer derartigen Einzelplatte ausreicht. Dementsprechend muß die Schnittiefe bei der Bearbeitung dieser Einzelplatten nicht geändert werden. Insbesondere bei solchen Verfahren ist es bevorzugt, wenn unterhalb der zu bearbeitenden Einzelplatte mindestens eine, vorzugsweise auswechselbare und großflächige Auflageplatte, insbesondere eine Holzwerkstoffplatte, vorgesehen ist. In diesen Fällen kann dann die Schnittiefe so gewählt werden, daß die zu bearbeitende Einzelplatte zuverlässig durchschnitten wird. Durch die beschriebene Maßnahme wird darüber hinaus vermieden, daß Störbereiche unterhalb der zu bearbeitenden Einzelplatte vorhanden sind, wie beispielsweise Lagerelemente, die dann ggf. durch die beschriebene Umfahrung dieser Bereiche berücksichtigt werden müßten. Bei diesen Ausführungsformen stehen nämlich beispielsweise die Lagerelemente mit der Auflage bzw. Auflageplatte in Kontakt und nicht mit der zu bearbeitenden Einzelplatte.

Bei der Erfindung kann die Einzelplatte allein und/oder die Einzelplatte zusammen mit einer Auflageplatte an einem Trägergestell mit Hilfe von Klemmitteln wie Klammern festgelegt sein, wobei vorzugsweise an den beiden Seiten Anschläge für die Einzelplatte vorgesehen sind. Die zur Festlegung vorhandenen Klammern können im Sinne der obigen Definition ebenfalls Störbereiche beim Zuschnitt oder bei der Befestigung von Abstandhalterteilen bilden. Dies kann dadurch berücksichtigt werden, daß mit Hilfe der Steuerung die Einzelplatte, ggf. mit oder ohne Auflageplatte, unter vorheriger mindestens teilweiser Lösung der Befestigungsklammern verschoben und anschließend nach Verschiebung wieder am Trägergestell festgelegt wird. Auch in diesem Fall wird die Verschiebung durch eine entsprechende Verschiebung eines Koordinaten-Bezugspunktes für die Parameter berücksichtigt.

Durch die Schnittfläche wird ein für die Herstellung eines Bauteils nicht weiterverwendeter Ausschnitt von der weiterverwendeten Einzelplatte getrennt. Der Ausschnitt kann ein Randbereich sein, aber auch ein Bereich, in dem beispielsweise eine Tür oder ein Fenster vorgesehen ist. Nach dem Verfahren ist es möglich, daß ein nicht weiterverwendeter Ausschnitt bzgl. einer Auflage lagefixiert wird und daß die weiterverwendete Einzelplatte gegenüber dem Ausschnitt insbesondere senkrecht zur x-y-Ebene bewegt und weggeführt wird und daß der Ausschnitt getrennt weggeführt wird. Bevorzugt ist es, wenn zuerst die weiterverwendete Einzelplatte und danach der Ausschnitt weggeführt wird. Der Ausschnitt kann bei geeigneter Neigung der Einzelplatte allein durch Reibung und Schwerkraft auf der Auflage lagefixiert werden. Dies kann insbesondere bei der im Rahmen des erfindungsgemäßen Verfahrens möglichen Horizontalbearbeitung der Einzelplatte erfolgen. Diese ist dadurch gekennzeichnet, daß daß die Einzelplatte mindestens während des Zuschnitts und der Wegführung im wesentlichen horizontal ausgerichtet gehalten wird. Es ist auch möglich, daß der Ausschnitt durch lösbare Befestigungsmittel, insbesondere durch mindestens eine Schraube, an der Auflage lagefixiert wird. Dies ist insbesondere bei geneigter Einzelplatte eine einfache Möglichkeit, Ausschnitt und weiterverwendete Einzelplatte voneinander zu trennen. Der Ausschnitt kann später wieder von der Auflage gelöst werden.

Insbesondere in solchen Fällen, in denen die Erzeugung der Schnittfläche nicht in horizontaler Lage der Einzelplatte erfolgt, kann es von Vorteil sein, wenn eine zu erzeugende Schnittfläche nicht vollständig erzeugt wird, so daß zur Stabilisierung der Einzelplatte ein den Abschnitt mit der weiterverwendeten Einzelplatte verbindender, später entfernbarer Überbrückungsbereich verbleibt. So können beispielsweise in Eckbereichen von Fenster- oder Türausschnitten kleine Überbrückungsstege verbleiben, die später leicht automatisch oder manuell entfernt werden können.

Bei der Befestigung von Abstandhalterteilen an der Einzelplatte ist es vorteilhaft, wenn die Verteilung auf Grundlage der für die Einzelplatte zu erwartenden Flächenverteilung lokaler Belastungen erfolgt.

In Weiterbildung kann beim erfindungsgemäßen Verfahren mindestens einer der folgenden Verfahrensschritte durchgeführt werden:
- Befestigung von einander komplementären Abstandhalterteilen an einander entsprechenden Positionen von einander zur Herstellung doppelwandiger Bauteile zuordenbaren Einzelplatten;
- Zusammensetzen von einander zugeordneten, mit Abstandhalterteilen versehenen Einzelplatten, wobei die einander entsprechenden komplementären Abstandhalterteile zur Bildung eines Abstandhalters aneinander befestigt werden können.

Ein Verfahren unter zusätzlicher Nutzung der beiden genannten Verfahrensschritte ist insbesondere zur Herstellung doppelwandiger Bauteile, wie verlorenen Schalungen, geeignet.

Es ist möglich, die Abstandhalter auf verschiedene Weisen aneinander zu befestigen, beispielsweise durch Verschrauben mittels Überwurfmuttern oder dergleichen. Bei einem bevorzugten Verfahren rasten beim Zusammensetzen die einander entsprechenden komplementären Abstandhalterteile ineinander ein.

Zur Bildung eines Abstandhalters können die miteinander zu verbindenden Abstandhalterteile jeweils einteilig ausgebildet sein. Bevorzugt ist es, wenn mindestens eines der komplementären Abstandhalterteile aus mehreren, insbesondere zwei, miteinander verbindbaren Abstandhalterelementen zusammengesetzt wird, insbesondere durch Einrasten eines Abstandhalterelementes in ein entsprechend komplementäres Abstandhalterelement. Eines der Abstandhalterelemente kann an der Einzelplatte befestigt werden und das andere kann je nach gewünschtem Abstand und/oder zu erwartender Belastung entsprechend verschiedene Dimensionen aufweisen. Das zu befestigende Abstandhalterelement kann immer von gleicher Ausbildung sein, was aus fertigungstechnischen und befestigungstechnischen Gründen bevorzugt ist.

Dabei kann zuerst ein Abstandhalterelement an der Einzelplatte befestigt und danach das mit diesem verbindbare Abstandhalterelement mit diesem zu einem Abstandhalterteil zusammengesetzt werden. Bei einem bevorzugten Verfahren erfolgt der Zusammenbau der Abstandhalterelemente zu einem Abstandhalterteil vor der Befestigung des Abstandhalterteiles an der Einzelplatte. Die Abstandhalterteile und/oder die Abstandhalterelemente können auf eine Befestigungsfläche einer Einzelplatte kraftschlüssig befestigt, insbesondere geschraubt werden.

In Weiterbildung des Verfahrens ist vorgesehen, daß die mit komplementären Abstandhalterteilen versehenen Einzelplatten aufeinander zu bewegt werden, bis alle komplementären Abstandhalterteile in Einraststellung einander gegenüber angeordnet sind, ohne ineinander einzurasten, und daß dann Abstandhalter, vorzugsweise gruppenweise gleichzeitig, zum Einrasten gebracht werden. Dabei ist es möglich, daß alle Abstandhalterteile des Bauteils mit im wesentlichen gleicher Kraft und im wesentlichen gleichzeitig zum Einrasten gebracht werden. Dies erfordert großflächige Kraftausübung, ggf. mit entsprechend großem technischen Aufwand.

Es kann zweckmäßig sein, wenn die Abstandhalterteile jeweils in Gruppen, vorzugsweise mit im wesentlichen gleicher Kraft, zum Einrasten gebracht werden, wobei eine vorzugsweise räumlich zusammenhängende Gruppe einen Teil oder Bruchteil aller Abstandhalterteile umfaßt. Durch die entsprechend geringere zum Einrasten notwendige Kraft ist es möglich, diesen Verfahrensschritt mit entsprechend kleineren Vorrichtungen zur Kraftausübung auf die Einzelplatten durchzuführen. Die miteinander zu verrastenden Einzelplatten und die entsprechenden Andrückvorrichtungen werden dabei relativ zueinander im wesentlichen parallel zur x-y-Ebene, vorzugsweise horizontal, bewegt werden. Die Relativbewegung kann vorzugsweise durch Bewegung der Einzelplatten gegenüber unbewegten Andrückvorrichtungen und vorzugsweise nur zwischen den einzelnen Andrückvorgängen erfolgen.

Bei bevorzugten Ausführungsformen ist das erfindungsgemäße Verfahren weiter so ausgestaltet, daß die Einzelplatten beim Zusammensetzen aus einer gegenüber der Senkrechten geneigten Stellung zunächst durch eine vorzugsweise synchronisierte Aufrichtbewegung in eine senkrechte Stellung gebracht werden. In dieser senkrechten Stellung sind die Einzelplatten einander gegenüber in Befestigungsstellung angeordnet, wobei die an den Einzelplatten vorgesehenen Abstandhalterteile einander bereits zugeordnet, jedoch noch nicht aneinander befestigt sind. Dementsprechend müssen entsprechende Abstandhalterteile nach dieser Aufrichtbewegung lediglich noch miteinander verrastet werden, um beispielsweise die verlorene Schalung fertigzustellen.

Die beschriebene Aufrichtbewegung kann dabei beispielsweise mit Hilfe von Elektrospindeln erfolgen. Vorzugsweise wird die Aufrichtbewegung aber durch eine Kombination von beidseitig angeordneten Balgzylindern mit einer mechanischen Kulissenführung bewirkt, deren Zusammenwirken ein synchronisiertes Aufrichten der beiden Einzelplatten gewährleistet. Durch die synchrone Bewegung wird nämlich erreicht, daß ein aus Wandteller und rohrförmigem Verbindungselement bestehendes Abstandhalterteil zuverlässig in die Öffnung des zugehörigen, an der gegenüberliegenden Einzelplatte befestigten Wandtellers eingeführt wird.

In Weiterbildung kann das erfindungsgemäße Verfahren derart ausgestaltet sein, daß die Einzelplatten in einer für die vorherigen Bearbeitungsschritte vorgesehenen geneigten Stellung einander gegenüber angeordnet werden und dann, bevor sie in die Senkrechtstellung aufgerichtet werden, zunächst auf den durch die betreffenden Abstandhalterteile definierten Abstand beim Zusammensetzen gebracht werden. Dieses Zusammenführen der beiden Einzelplatten in geneigter Stellung auf den definierten Abstand wird vorzugsweise durch eine elektromotorische Spindelverstellung bewirkt, die selbstverständlich ebenfalls von der Steuerung des Gesamtsystems angesprochen werden kann.

Schließlich sei die Situation erwähnt, daß insbesondere nichttragende Seitenteile schräg, vorzugsweise aber rechtwinklig, an vorzugsweise doppelwandige Bauteile angesetzt werden sollen. Dazu kann an der dem Seitenteil zugewandten Einzelplatte eine ggf. auf Gehrung geschnittene Vertiefung oder ein ggf. auf Gehrung geschnittener Schlitz ausgebildet werden. In diese Vertiefung bzw. in den Schlitz wird dann das nichttragende Seitenteil eingesetzt. Es stößt dabei nicht stumpf an die Doppelwand an. Hierdurch werden ästhetische Unebenheiten vermieden, außerdem wird die Möglichkeit geschaffen, nach Silikonfüllung sonst notwendige Anfasungen zu vermeiden, wodurch sich erhebliche Kosteneinsparungen erzielen lassen.

Die Herstellung von Bauteilen gemäß der vorliegenden Erfindung kann vollautomatisch erfolgen, wobei eine Anlage mehrere Stationen aufweist, mit denen die einzelnen Teilschritte durchgeführt werden. Zwischen den Stationen können die Einzelplatten oder Zwischenkonstruktionen mittels Transportmitteln, beispielsweise Transport- oder Umsetzerwagen, transportiert werden. Die Einzelplatten können zweckmäßigerweise markiert sein, so daß sie insbesondere maschinenlesbar identifiziert werden können.

Eine erfindungsgemäße Anlage weist eine Zuschneidevorrichtung zur Erzeugung mindestens einer Schnittfläche an mindestens einer vorgegebenen Einzelplatte durch Sägen und/oder Fräsen auf, die mindestens eine Sägevorrichtung mit mindestens einem Sägewerkzeug, insbesondere einer Kreissäge, und/oder mindestens eine Fräsvorrichtung mit mindestens einem Fräswerkzeug aufweist, wobei das Sägewerkzeug und das Fräswerkzeug nach Vorgabe, insbesondere CAD-Vorgabe, über die bereits definierten Parameter A, E, N computergesteuert bewegbar sind.

Die Sägevorrichtung kann vorzugsweise zur Erzeugung ebener Schnittflächen und die Fräsvorrichtung sowohl für die Erzeugung ebener Schnittflächen, als auch zur Ausbildung von Rundungen nach Maßgabe der genannten Parameter ausgebildet sein. Insbesondere kann das Fräswerkzeug zur Erzeugung von Ecken computergesteuert bewegbar sein; dadurch kann eine bei der Ausbildung von Ecken mittels einer Säge ggf. notwendige Überkreuzung von Schnittflächen vermieden werden. Das Sägewerkzeug und das Fräswerkzeug können auch nach Vorgabe, insbesondere CAD-Vorgabe, zusätzlich über den Parameter T computergesteuert bewegbar sein.

An der Zuschneidevorrichtung befinden sich vorzugsweise Anschlagmittel zur definierten Positionierung der zu bearbeitenden Einzelplatte. Insbesondere ist einer Einzelplatte, ggf. zusammen mit einer Auflageplatte, an ihren beiden vertikalen Seiten jeweils ein Anschlag zuordenbar. Durch die definierte Positionierung wird die gesteuerte Bearbeitung der Platte mit Hilfe der definierten Parameter ermöglicht.

Bei einer bevorzugten Ausführungsform der Zuschneidevorrichtung sind die Sägevorrichtung und die Fräsvorrichtung parallel zur x-y-Ebene verfahrbar an einem Translationsträger eines Translationsgestelles angeordnet. Es können getrennte Translationsträger für die Sägevorrichtung und die Fräsvorrichtung vorgesehen sein. Vorzugsweise sind die Sägevorrichtung und die Fräsvorrichtung an einem gemeinsamen Translationsträger angeordnet. Die Anordnung ermöglicht eine freie Bewegung der Sägevorrichtung und der Fräsvorrichtung parallel zur x-y-Ebene.

Zur Erzeugung einer Neigung der Schnittfläche relativ zur Einzelplatte ist bei einer bevorzugten Ausführungsform vorgesehen, daß das Sägewerkzeug in eine schräg zur x-y-Ebene ausgerichtete Sägeebene schwenkbar ist. Weiter kann es um eine senkrecht zur x-y-Ebene verlaufende Drehachse drehbar und/oder um eine quer, insbesondere senkrecht zur Drehachse verlaufende Sägenschwenkachse schwenkbar in der Sägevorrichtung geführt sein. Das Fräswerkzeug weist eine senkrecht zur x-y-Ebene und vorzugsweise auch schräg dazu ausrichtbare Fräswerkzeugdrehachse auf. Weiter kann es um eine quer, insbesondere senkrecht zur Fräswerkzeugdrehachse verlaufende Fräsenschwenkachse schwenkbar in der Fräsvorrichtung geführt sein. Das Sägewerkzeug kann mit der Sägeebene und das Fräswerkzeug mit der Fräswerkzeugdrehachse parallel zum Schnitttiefenvektor in eine parallel zum Schnittiefenvektor verlaufende Eintauchrichtung linear bewegbar geführt sein, um ein Eintauchen des Werkzeuges in die Einzelplatte zu ermöglichen.

Sowohl das Sägewerkzeug als auch das Fräswerkzeug kann die jeweiligen, im vorherigen Absatz beschriebenen Funktionen bzw. Orientierungen einzeln oder in Kombination aufweisen. Bevorzugt sind bei der Erfindung Säge- und/oder Fräsvorrichtungen, bei denen sowohl das Sägewerkzeug als auch das Fräswerkzeug alle Funktionen erfüllen, d.h. sämtliche Bewegungen beim Zuschnitt der Einzelplatten ausführen kann.

Bei einer bevorzugten Ausführungsform sind das Fräswerkzeug und das Sägewerkzeug derart zueinander angeordnet, daß die Fräswerkzeugdrehachse im wesentlichen, insbesondere parallel um den Radius des Fräswerkzeuges versetzt, in der Sägeebene liegt. Dadurch kann durch eine parallel zur Sägeebene verlaufende Bewegung das Fräswerkzeug zu der von dem Sägewerkzeug ggf. schon bearbeiteten Stelle bewegt werden bzw. umgekehrt. Das Fräswerkzeug und das Sägewerkzeug können auch um eine gemeinsame, senkrecht zur Sägeebene und senkrecht zur Fräswerkzeugdrehachse verlaufende Schwenkachse vorzugsweise gemeinsam verschwenkbar angeordnet sein, wobei der der Schwenkachse abgewandte Endbereich des Fräswerkzeuges und die der Schwenkachse abgewandte Außenseite des Sägewerkzeuges im wesentlichen den gleichen radialen Abstand von der Schwenkachse aufweisen, und vorzugsweise die Fräswerkzeugdrehachse radial zur Schwenkachse verläuft. Durch diese Anordnung wird es möglich, durch eine Drehung um die Schwenkachse einen Werkzeugwechsel derart vorzunehmen, daß das Fräswerkzeug genau an den Bearbeitungsort des Sägewerkzeuges geschwenkt wird bzw. umgekehrt. Die Werkzeuge können auch derart zueinander angeordnet sein, daß die Sägenschwenkachse und die Fräsenschwenkachse kolinear verlaufen.

Während des Zuschneidens kann die Einzelplatte in der Zuschneidevorrichtung in der gewünschten Lage gehalten werden. Dazu kann die Einzelplatte beispielsweise punktuell abgestützt sein, beispielsweise auf Rippen oder Noppen. Bei einer bevorzugten Ausführungsform ist der Zuschneidevorrichtung mindestens eine, vorzugsweise auswechselbare, großflächige Auflage, insbesondere eine Holzwerkstoffplatte, zugeordnet, auf die die Einzelplatte mit ihrer Plattenrückseite flächig auflegbar ist. Die Einzelplatte kann an der Auflage festgehalten werden, beispielsweise durch Klemmen. Die großflächige Auflage hat u.a. den Vorteil, daß die zu bearbeitende Einzelplatte vollflächig unterstützt ist, daß die Schnitte und Fräsungen in der Tiefe bis in die Auflage hinein geführt werden können und daß bei einer Schnittführung, die zwar die Einzelplatte voll durchdringt, nicht aber die großflächige Auflage, die Schnittfläche im wesentlichen nur zur Seite des Bearbeitungswerkzeuges hin geöffnet ist. Durch eine dem Bearbeitungswerkzeug zuordenbare Absaugvorrichtung können somit Bearbeitungsrückstände wie Staub und Späne leicht abgesaugt werden. Die als Verschleißplatte dienende Auflage, insbesondere die Holzwerkstoffplatte, kann auch beim Transport eine auf ihr aufliegende, fertig zugeschnittene Einzelplatte unterstützen. Auf die bei der Beschreibung des erfindungsgemäßen Verfahrens bereits geschilderten Merkmale im Zusammenhang mit der Vermeidung von Störbereichen, auch im Zusammenwirken mit der Steuerung des Verfahrens bzw. der Anlage, sei an dieser Stelle nochmals verwiesen.

Bevorzugt weist die Zuschneidevorrichtung Mittel zur Bewegung der Einzelplatte relativ zur Zuschneidevorrichtung parallel zur x-y-Ebene auf, wobei diese Bewegung vorzugsweise in horizontaler Richtung erfolgt und wobei vorzugsweise die Einzelplatte nach Vorgabe, insbesondere CAD-Vorgabe, computergesteuert bewegbar ist. Die Mittel zur Bewegung können beispielsweise als in horizontaler Richtung bewegbares Förderband oder als Rollen ausgebildet sein, auf dem bzw. auf denen die Einzelplatte aufsteht. Gegebenenfalls vorhandene Haltemittel für die Einzelplatte können derart ansteuerbar sein, daß sie die Einzelplatte für eine Relativbewegung freigeben und anschließend wieder festhalten. Zur Ermöglichung einer in ihrem Betrag genau definierten Relativbewegung kann die Zuschneidevorrichtung einen ersten Anschlag und mindestens einen parallel zur x-y-Ebene, insbesondere in dieser liegenden, vorzugsweise horizontal, gegenüber dem ersten Anschlag versetzt angeordneten zweiten Anschlag für die Einzelplatte aufweisen. Durch Bewegung der Einzelplatte zwischen den Anschlägen und entsprechende Steuerung der Bearbeitungswerkzeuge kann die beschriebene Aussparung der Störbereiche beim Zuschneiden unterstützt werden. Die Zuschneidevorrichtung kann unabhängig von den nachfolgend beschriebenen Vorrichtungen der Anlage mit Vorteil eingesetzt werden.

Die Anlage weist weiterhin mindestens eine Bestückungsvorrichtung zur Befestigung einer Vielzahl von Abstandhalterteilen auf einer Befestigungsfläche mindestens einer Einzelplatte auf. Die Bestückungsvorrichtung weist mit Vorteil mindestens einen, vorzugsweise CAD-abhängig, parallel zur x-y-Ebene frei programmierbar bewegbaren Roboterkopf auf, der dazu ausgelegt ist, die Abstandhalterteile an der Einzelplatte zu befestigen. Es kann insbesondere eine kraftschlüssige Befestigung erfolgen. Vorzugsweise weist der Roboterkopf mindestens eine Schraubeinrichtung auf. Einander zugeordnete Einzelplatten können dabei in der Bestückungsvorrichtung gleichzeitig, mittels jeweils eines zugeordneten Roboterkopfes, oder nacheinander durch nur einen Roboterkopf verarbeitet werden. Die Arbeitsweise der Bestückungsvorrichtung, insbesondere die Zufuhr der Abstandhalterteile, werden im Zusammenhang mit den Zeichnungsfiguren näher beschrieben.

Die Anlage kann weiterhin mindestens eine Fügevorrichtung zum Zusammensetzen von einander zugeordneten, mit Abstandhalterteilen versehenen Einzelplatten aufweisen. Die Fügevorrichtung kann mindestens ein Paar relativ aufeinander zu bewegbare Preßrahmen zur Aufnahme jeweils einer mit Abstandhalterteilen versehenen Einzelplatte aufweisen, wobei mindestens einem der Preßrahmen mindestens eine ein Einrasten der zueinander ausgerichteten Abstandhalterteile ineinander bewirkende Andrückeinrichtung zugeordnet ist. Die Andrückeinrichtung ist elektromotorisch, hydraulisch oder, was bevorzugt ist, pneumatisch betreibbar. Letzteres ist insbesondere dann von Vorteil, wenn in einer Werkhalle, in der die Anlage aufgebaut sein kann, Drucklufteinrichtungen bereits vorhanden sind. Vorzugsweise sind pneumatische Luftbalgzylinder verwendbar.

Es ist möglich, die Andrückeinrichtung so auszubilden, daß sie zur Ausübung eines im wesentlichen gleichzeitig über die gesamte Fläche der Einzelplatte wirkenden Druckes ausgebildet ist. Alternativ hierzu kann die Andrückeinrichtung zur Ausübung eines im wesentlichen gleichmäßig über einen Andrückbereich wirkenden Druckes ausgebildet sein, wobei der Andrückbereich einem Teil oder Bruchteil der gesamten Fläche der Einzelplatte entspricht und wobei eine Verschiebungseinrichtung zur Erzeugung einer Relativbewegung zwischen Andrückeinrichtung und den Einzelplatten vorgesehen ist. Vorzugsweise werden dann die Einzelplatten bewegt. Die Bewegung der Einzelplatten erfolgt jeweils zwischen Andrückvorgängen. Im Zusammenhang mit einer nur über einen Andrückbereich wirkenden Andrückvorrichtung kann es vorteilhaft sein, wenn die Abstandhalterteile Einrastmittel aufweisen, die derart ausgebildet sind, daß der für das gegenseitige Einrasten notwendige Einrastweg so gering ist, daß die Verbiegung einer Einzelplatte zwischen einem bereits eingerasteten Abstandhalter und benachbarten, einander schon berührenden, aber noch nicht eingerasteten Abstandhalterteilen im wesentlichen im Elastizitätsbereich der Einzelplatten liegt. Hierbei können der Abstand benachbarter Abstandhalter und der Einrastweg derart aufeinander abgestimmt werden, daß bei größeren Abständen Abstandhalterteile mit größeren Einrastwegen verwendet werden.

Um weitere vorteilhafte Betriebsarten zu ermöglichen, können bei der erfindungsgemäßen Anlage einem Preßrahmen mindestens zwei Andrückeinrichtungen zugeordnet sein, die sowohl einzeln als auch in beliebiger Kombination miteinander betätigbar sind. Vorzugsweise kann dabei jeder Andrückeinrichtung eine Druckplatte zugeordnet sein, die pneumatisch mit Druck beaufschlagbar ist. Die pneumatische Druckbeaufschlagung kann dabei insbesondere über mindestens einen Luftbalgzylinder erfolgen. Bei den beschriebenen Ausführungsformen wird erreicht, daß nicht in jedem Fall alle Andrückeinrichtungen zum Verpressen bzw. Zusammensetzen der Einzelplatten betätigt werden müssen. Es können wahlweise immer nur die Andrückeinrichtungen betätigt bzw. die Druckplatten mit Druck beaufschlagt werden, deren Betätigung bzw. Druckbeaufschlagung notwendig ist. Wird beispielsweise eine Einzelplatte beliebigen Zuschnitts in eine Fügevorrichtung mit größeren Abmessungen eingebracht, so werden nur die Teile der Fügevorrichtung benutzt, denen die Platte bzw. das Plattenpaar zugeordnet ist. Genauso können auch bei bestimmten Platten bzw. Plattenpaaren bestimmte Bereiche nicht mit Druck beaufschlagt werden, an denen beispielsweise keine Abstandhalterteile vorhanden sind oder an denen eine Druckbeaufschlagung aus anderen Gründen, beispielsweise weil sich dort ein Fensterelement befindet, nicht zweckmäßig ist.

In Weiterbildung kann bei der erfindungsgemäßen Anlage eine Verriegelungseinrichtung, insbesondere eine Verriegelungsstange oder -bolzen zur gegenseitigen Festlegung der Preßrahmen vorgesehen sein. Auf diese Weise werden die Preßrahmen und damit die Einzelplatten, die zusammengefügt werden sollen, in einer definierten gegenseitigen Lage gehalten.

In der Anlage kann weiterhin der Zuschneidevorrichtung nachgeschaltet mindestens eine erste Zwischenspeichereinrichtung zur Aufnahme mindestens einer zugeschnittenen Einzelplatte vorgesehen sein. Der Bestückungsvorrichtung nachgeschaltet kann mindestens eine zweite Zwischenspeichereinrichtung mit einer Mehrzahl, insbesondere einer Vielzahl von Speicherplätzen zur Aufnahme von mit Abstandhalterteilen bestückten Einzelplatten vorgesehen sein. Die zweite Zwischenspeichereinrichtung kann mit Vorteil eine Aufnahmekapazität haben, die derart der Bestückungskapazität der Bestückungsvorrichtung angepaßt ist, daß für jede fertig bestückte Einzelplatte mindestens ein Speicherplatz frei ist. Dadurch kann die investitions- und arbeitsintensive Bestückungsvorrichtung praktisch ohne größere Pausen betrieben werden. Der zweiten Speichereinrichtung können auch Mittel zur Anbringung von Bewehrungen, wie Bewehrungsmatten oder Gitterträgern, an den Abstandhalterteilen sowie ggf. Mittel zur Installation von Haustechnikelementen, wie Leerrohren, Rohren oder dergleichen sowie ggf. weiterer Bauelemente, insbesondere Fenster- und/oder Türelemente, zugeordnet sein. Der Fügestation nachgeschaltet kann mindestens eine Aufnahmevorrichtung für fertige Bauteile vorgesehen sein.

Die einzelnen Vorrichtungen der Anlage können in einer im wesentlichen geradlinigen Fertigungsstrecke zueinander angeordnet sein. Für eine bessere Raumausnutzung kann zur Änderung der Transportrichtung der Einzelplatte in der Anlage mindestens eine eine Drehung der Einzelplatte um eine vertikale Achse bewirkende Drehvorrichtung vorgesehen sein, die vorzugsweise als Drehboden ausgebildet ist, auf dem eine die Einzelplatte tragende Vorrichtung angeordnet ist. Auf diese Weise können beispielsweise U-förmige oder mäanderförmige Fertigungsstrecken aufgebaut werden.

Die beschriebenen Merkmale und weitere Merkmale der Erfindung ergeben sich aus der nachfolgenden Beschreibung von bevorzugten Ausführungsformen in Verbindung mit den Unteransprüchen und den Zeichnungen.

In den Zeichnungen zeigen:
- Fig.1: eine stark schematisierte Darstellung einer aus sechs Stationen bestehenden Fertigungsstrecke zur Herstellung eines doppelwandigen Bauteiles gemäß der Erfindung;
- Fig. 2: ein Beispiel für die Ausgestaltung einer Zuschneidevorrichtung (Station I in Fig. 1);
- Fig. 3: ein Beispiel für die Ausgestaltung der Bestückungsvorrichtung (Station III in Fig. 1) in Seitenansicht (unten) und Aufsicht (oben);
- Fig. 4: ein Beispiel für die Ausgestaltung der zweiten Zwischenspeichereinrichtung (Station IV in Fig. 1) in Seitenansicht (unten) und Aufsicht (oben);
- Fig. 5: ein Beispiel für die Ausgestaltung der Fügevorrichtung (Station V in Fig. 1).

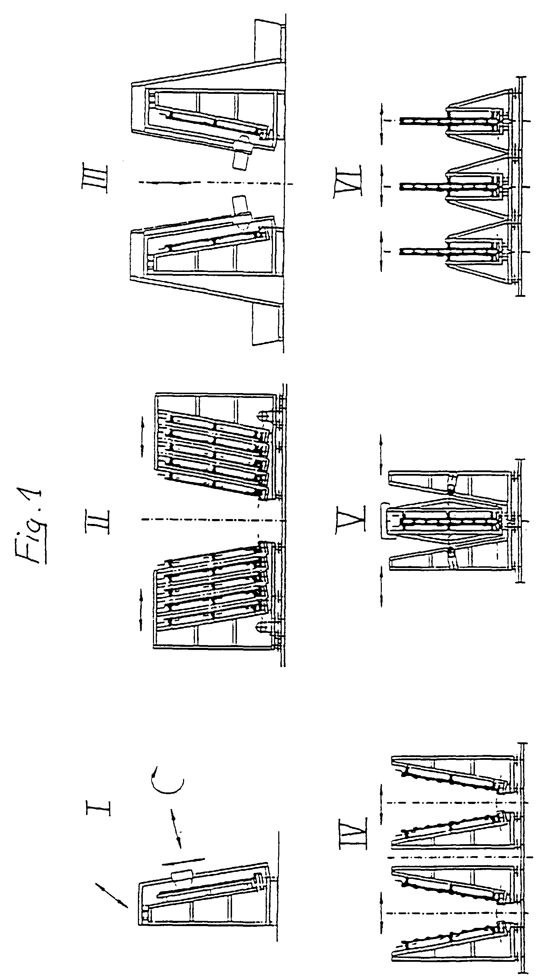

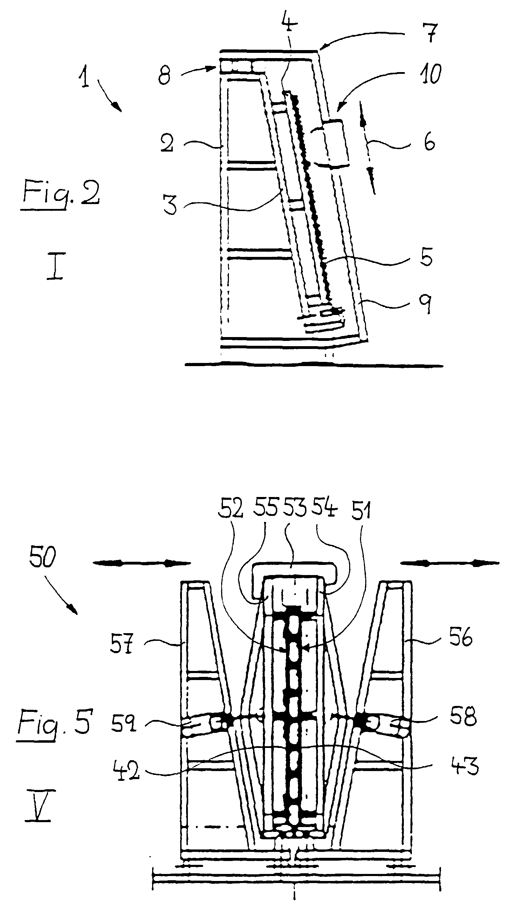

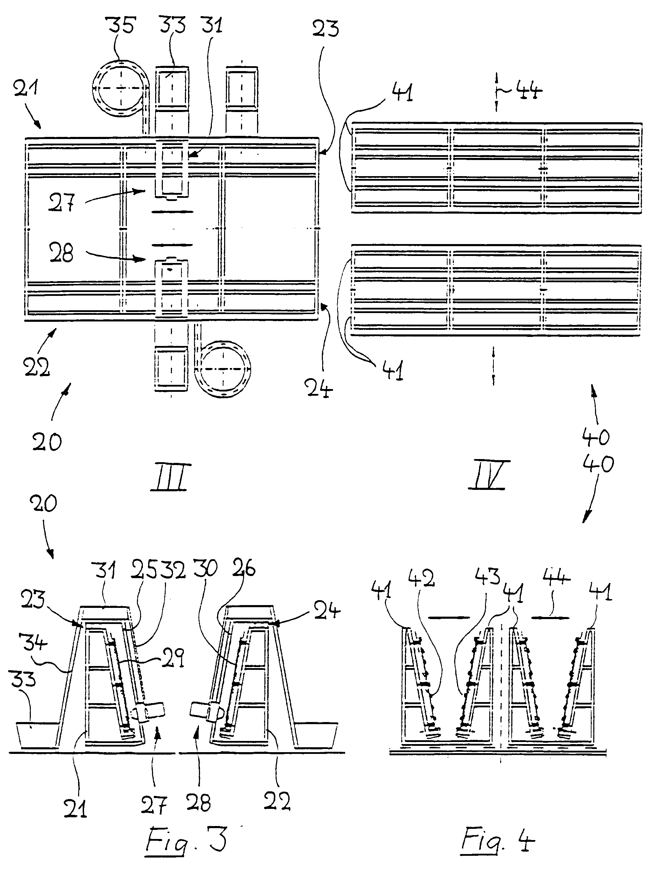

Die Fertigungsstrecke in Fig. 1 besteht aus sechs Stationen. Die Zuschneidevorrichtung (Station I) wird im Zusammenhang mit Fig. 2 detailliert beschrieben werden. In der Zuschneidevorrichtung wird eine Einzelplatte, beispielsweise eine Holzwerkstoffplatte, mittels einer kombinierten Säge- und Fräsvorrichtung nach Vorgabe, insbesondere durch ein CAD-Programm zugeschnitten. Die Einzelplatte erhält hier auch eine vorzugsweise maschinenlesbare Markierung mit den Spezifikationen für die weitere Bearbeitung. Einzelplatten können grundsätzlich in beliebiger Reihenfolge zugeschnitten werden. Bevorzugt werden einander zugeordnete Einzelplatten nacheinander bearbeitet. Die erste Zwischenspeichereinrichtung (Station II) nimmt eine Vielzahl der zugeschnittenen Einzelplatten auf. Sie kann als Transportwagen zur Überführung der Einzelplatten von Station I nach Station III dienen. Sie weist für jede Einzelplatte getrennt ansteuerbare, elektromotorisch betriebene Förderbänder zur Bewegung der Einzelplatten in x-Richtung auf. Die Einzelplatten sind, wie in Fig. 1 gezeigt, geneigt, können aber auch vertikal stehen. Die erste Zwischenspeichereinrichtung kann auf einem Drehteller angeordnet sein, um eine Änderung der Transportrichtung innerhalb der Fertigungsstrecke für eine bessere Raumausnutzung innerhalb der Werkhalle zu ermöglichen. In der Bestückungsstation (Station III), die in Zusammenhang mit der Fig. 3 näher beschrieben werden wird, stehen sich zwei Einzelplatten, die das doppelwandige Bauteil bilden sollen, auf zwei Wagen gegenüber, auf denen sie mittels jeweils eines Roboterkopfes mit Abstandhalterteilen versehen werden. Die mit Abstandhalterteilen versehenen Einzelplatten werden dann in die zweite Zwischenspeichereinrichtung (Station IV der Fig. 1) überführt, die in Zusammenhang mit Fig. 4 näher beschrieben wird. In der im Zusammenhang mit Fig. 5 näher beschriebenen, nachgeschalteten Fügevorrichtung (Station V) werden die mit komplementären Abstandhalterteilen versehenen Einzelplatten aufeinander zu bewegt, bis alle komplementären Abstandhalterteile in Einraststellung einander gegenüber angeordnet sind, ohne ineinander einzurasten. Sie werden daraufhin gruppenweise gleichzeitig zum Einrasten gebracht und bilden nach Einrasten der Abstandhalterteile ein fertiggestelltes Bauteil. Dieses wird von der Aufnahmevorrichtung (Station VI) aufgenommen, die der Fügevorrichtung nachgeschaltet ist. Insbesondere die Vorrichtungen der Stationen II, IV, V und VI können horizontal quer, vorzugsweise senkrecht zum Verlauf der Fertigungsstrecke beispielsweise auf Schienen verfahrbar sein.

Die Seitenansicht in Fig. 2 zeigt eine Zuschneidevorrichtung 1 mit einem Trägergestell 2, das auf seiner Vorderseite um etwa 10° gegen die Senkrechte geneigte Träger 3 aufweist. An den Trägern 3 ist eine schräggestellte Verschleißplatte 4 in Form einer Holzwerkstoffplatte befestigt, die als großflächige Auflage für die Einzelplatte 5 dient, die vorzugsweise ebenfalls eine Holzwerkstoffplatte ist und auf im Fußbereich des Trägergestells angeordneten Rollen in das Trägergestell eingeschoben wurde. Die Einzelplatte ist auf der Auflage festgespannt. Die geneigte Auflagefläche definiert eine x-y-Ebene, deren x-Achse horizontal, also senkrecht zur Bildebene, und deren y-Achse senkrecht zur x-Achse parallel zur Richtung 6 verläuft.

An dem Trägergestell 2 ist ein Translationsgestell 7 angeordnet, das an einer in x-Richtung verlaufenden Linearführung 8 in x-Richtung verschiebbar geführt ist und mindestens eine parallel zur y-Richtung verlaufende Führungsschiene 9 aufweist, an der die kombinierte Säge- und Fräsvorrichtung 10 an einem Translationsträger befestigt in y-Richtung 6 bewegbar geführt ist.

An dem Trägergestell 2 sind im Fußbereich der Einzelplatte nicht im einzelnen dargestellte Rollen angebracht, auf denen die Einzelplatte gemeinsam mit der Verschleißplatte 4 in x-Richtung bewegbar gelagert ist. Dies ermöglicht u.a. die bereits beschriebene Relativbewegung von Einzelplatte und Zuschneidevorrichtung gegeneinander bei der Aussparung von Störbereichen bei der Erzeugung der Schnittflächen.

Die Säge- und Fräsvorrichtung 10 weist eine Kreissäge und eine Fräse auf, die mit dem Translationsträger gemeinsam frei in der x-y-Ebene computergesteuert bewegbar sind. Sowohl das Sägewerkzeug, die Kreissäge, als auch das Fräswerkzeug haben weitere Freiheitsgrade, die es für die Kreissäge ermöglichen, auch Gehrungsschnitte in beliebiger Richtung und Neigung zu schneiden, und die es auch dem Fräswerkzeug ermöglichen, an beliebiger Stelle der Einzelplatte Rundungen, andere Formschnitte oder Ecken auszuführen. Die zusätzlichen Freiheitsgrade des Sägewerkzeuges und des Fräswerkzeuges werden durch die beschriebenen Drehungen bzw. Schwenkungen der Werkzeuge ermöglicht. Die Steuerung der Schnittiefe über dem Parameter T erlaubt, daß bei Erzeugung einer Schnittfläche das jeweilige Bearbeitungswerkzeug nicht oder nur unwesentlich in die Verschleißplatte 4 eindringt. Bezüglich der möglichen Orientierungen des Säge- und/oder Fräswerkzeuges wird auf die Pfeildarstellungen zu Station I in Fig. 1 verwiesen. Eine (nicht gezeigte) Absaugeinrichtung sorgt für die Entfernung der Bearbeitungsrückstände von der Seite der Bearbeitungswerkzeuge. Die Auflage oder Verschleißplatte kann bei Bedarf von Zeit zu Zeit ausgewechselt werden.

Fig. 3 zeigt die Bestückungsvorrichtung 20 (Station III in Fig. 1) in Seitenansicht (unten) und Aufsicht (oben). Die Bestückungsvorrichtung weist zwei sich gegenüberstehende Trägergestelle 21, 22 auf, von denen jedes im Prinzip so aufgebaut ist wie das Trägergestell 2 der Zuschneidevorrichtung 1. Durch die in x-Richtung verlaufenden Linearführungen 23, 24 und die daran geführten, in y-Richtung ausgerichteten Führungsschienen 25, 26 sind die Roboterköpfe 27, 28 parallel zur x-y-Ebene frei beweglich geführt, wobei mit Hilfe einer Steuerung eine beliebige x-y-Position eines Roboterkopfes angefahren werden kann. Die Roboterköpfe 27, 28 dienen dazu, die auf dem jeweiligen Trägergestell 21, 22 liegende Einzelplatte 29, 30 nach Vorgabe, insbesondere CAD-Vorgabe, mit Abstandhalterteilen zu versehen. Diese werden mit Hilfe einer an dem Roboterkopf angeordneten Schraubvorrichtung aufgeschraubt. Da die Roboterköpfe 27, 28 frei programmierbar sind, können die Abstandhalterteile nach unterschiedlichen Verteilungen angebracht werden. Dies können regelmäßige Raster sein. Die Anordnung und Dichte der Abstandhalterteile kann auch gemäß der zu erwartenden Belastung der Einzelplatten bzw. doppelwandigen Bauteile eingestellt werden.

Die Roboterköpfe 27, 28 sind im wesentlichen identisch aufgebaut. Im folgenden wird nur eine Seite der Bestückungsvorrichtung ausführlicher beschrieben. Vorzugsweise kann ein Roboterkopf mindestens einen Schrauber aufweisen, mit dem die Abstandhalterteile durch Verschraubung auf der Einzelplatte 29 befestigt werden. Üblicherweise wird ein Abstandhalterteil mit Hilfe mehrerer Schrauben an der Einzelplatte 29 befestigt sein. Dementsprechend können diese Schrauben bei Vorhandensein nur eines Schraubers nacheinander eingedreht werden. Vorzugsweise sind jedoch mehrere Schrauber im Roboterkopf vorhanden, insbesondere genau so viele Schrauber wie Schrauben zur Befestigung eines Abstandhalterteils benötigt werden (beispielsweise sechs). Auf diese Weise kann die Geschwindigkeit der Bestückungsvorrichtung 20 wesentlich erhöht werden. Dem linken Trägergestell 21 ist ein mit dem Roboterkopf 27 in x-Richtung verfahrbares Andockmagazin 31 zur Aufnahme und Abgabe einer Vielzahl von (nicht gezeigten) Abstandhalterteilen und eine mit dem Andockmagazin 31 und dem Roboterkopf 27 zusammenarbeitende Zuführeinrichtung 32 für die lagerichtige Zuführung der Abstandhalterteile zum Befestigungsort auf der Befestigungsfläche der Einzelplatte 29 auf. Das Andockmagazin 31 ist bei der gezeigten Ausführungsform oberhalb der Einzelplatte 29 angeordnet. Die Zuführeinrichtung 32 arbeitet schwerkraftunterstützt, wobei die Abstandhalter schräg zum Roboterkopf nach unten rutschen, von diesem aufgenommen und auf die Einzelplatte geschraubt werden. Bei geneigter Einzelplatte ist somit für die Zufuhr der Abstandhalterteile zum Roboterkopf kein gesonderter Antrieb notwendig.

Der Roboterkopf kann auch Mittel zum Verbinden miteinander zur Bildung eines Abstandhalterteiles verbindbarer Abstandhalterelemente aufweisen, vorzugsweise eine Einrichtung zum Einrasten eines zweiten Abstandhalterelementes an einem bereits an der Einzelplatte befestigten ersten Abstandhalterelement. Damit kann ein an der Einzelplatte befestigtes Abstandhalterteil geschaffen werden.

Der Bestückungsstation 20 ist weiterhin ein Aufnahmebehälter 33 für die Aufnahme einer Vielzahl ggf. beliebig orientierter Abstandhalterteile zugeordnet. Diese können regellos in den Aufnahmebehälter geschüttet werden. Durch eine Rütteleinrichtung werden die regellos orientierten Abstandhalterteile in eine geordnete Ausrichtung gebracht. Durch mindestens eine Transporteinrichtung 34 werden die Abstandhalterteile dem Andockmagazin 31 zugeführt. Die Schrauben zur Befestigung der Abstandhalterteile können entsprechend durch eine Schraubenzufuhreinrichtung 35 dem Roboterkopf zugeführt werden. Die Schraubenzufuhreinrichtung arbeitet pneumatisch, wobei die Schrauben durch einen Luftstrom dem Roboterkopf zugeführt werden. Bei mehrteiligen, insbesondere zweiteiligen Abstandhalterteilen werden diese vorzugsweise bereits im Bereich des Aufnahmebehälters 33 zusammengesetzt und in zusammengesetztem Zustand auf die Einzelplatte 29 aufgebracht.

Fig. 4 zeigt die der Bestückungsvorrichtung 20 nachgeschaltete zweite Zwischenspeichereinrichtung 40. Im gezeigten Beispiel weist sie zwei Paare von Trägergestellen 41 auf, die prinzipiell ähnlich wie die Trägergestelle 2 und 21 der bereits beschriebenen Vorrichtungen aufgebaut sind, jedoch ohne die Führungsschienen und Linearführungen. Jedes Paar von Trägergestellen bildet einen verfahrbaren Armierwagen mit zwei Speicherplätzen für jeweils eine fertig bestückte Einzelplatte. Die gezeigten vier Speicherplätze der zweiten Zwischenspeichereinrichtung 40 reichen aus, damit jederzeit für eine fertig bestückte Einzelplatte mindestens ein Speicherplatz frei ist. So kann kein Einzelplattenstau entstehen und die Bestückungsvorrichtung 20 kann, ggf. bis auf kurze Unterbrechungen bei der Zufuhr von neu zu bestückenden Einzelplatten, kontinuierlich arbeiten.

Die mit komplementären Abstandhalterteilen bestückten Einzelplatten (in Fig. 4 ist ein Abstandhalterteil mit dem Bezugszeichen 42 und das komplementäre Abstandhalterteil mit dem Bezugszeichen 43 bezeichnet) können in der zweiten Zwischenspeichereinrichtung 40 mit Bewehrungen, wie Bewehrungsmatten oder Gitterträgern, versehen werden, die an den Abstandhalterteilen angebracht, insbesondere eingerastet werden können. Weiterhin können die genannten Haustechnikelemente und/oder weiteren Bauelemente an den Einzelplatten angebracht werden. Dies kann manuell erfolgen, es können auch automatische Mittel vorgesehen sein. Die Trägergestelle 41 bzw. die Armierwagen können seitlich, etwa in Richtung der Pfeile 44, verfahrbar sein, so daß zur Übernahme der bestückten Einzelplatten von der Bestückungsvorrichtung eine optimale Ankopplung erreicht werden kann.

Fig. 5 zeigt die Fügevorrichtung 50 (Station V in Fig. 1) in dem Zustand, in dem die an den Einzelplatten 51, 52 angeschraubten, einander komplementären Abstandhalterteile (42 und 43 sind bezeichnet) ineinander eingerastet sind. Die Einzelplatten 51, 52 wurden in der in Fig. 4 gezeigten, gegeneinander geneigten Stellung in der bereits beschriebenen Weise zunächst in geneigter Stellung auf den durch die betreffenden Abstandhalterteile 42 und 43 definierten Abstand gebracht, und zwar insbesondere mit Hilfe einer elektromotorischen Spindelverstellung. Dann wurden die Einzelplatten 51, 52 durch eine synchronisierte Aufrichtbewegung in eine im wesentlichen senkrechte Stellung verfahren. Diese Aufrichtbewegung wurde durch eine Kombination von beidseitig angeordneten Balgzylindern mit einer mechanischen Kulissenführung bewirkt. Die Einzelplatten werden dabei aufeinander zu bewegt, bis alle komplementären Abstandhalterteile in Einraststellung einander gegenüber angeordnet sind, ohne ineinander einzurasten. Durch die Verriegelungsvorrichtung 53 werden die Oberkanten der Preßrahmen 54, 55 in ihrer relativen Position zueinander fixiert. Jeder der Preßrahmen 54, 55, der zur Aufnahme jeweils einer mit Abstandhalterteilen versehenen Einzelplatte ausgebildet ist, ist an einem Pressengestell 56 bzw. 57 angeordnet. Mit Hilfe der beidseitig angeordneten Aufrichteinrichtungen 58, 59, insbesondere in Form von Balgzylindern, können die beiden Einzelplatten 51, 52, vorzugsweise in Kombination mit einer in Fig. 5 nicht näher dargestellten mechanischen Kulissenführung im Bodenbereich der Fügevorrichtung 50, scherenartig in die senkrechte Einrastungsstellung gebracht werden. Die in Fig. 5 gezeigten Preßrahmen 54, 55 können in der senkrecht zur Bildebene verlaufenden y-Richtung wesentlich schmaler als die Einzelplatte sein, so daß sie nur über einen schmalen vertikalen Andrückbereich auf die Einzelplatten wirken. Bei einem Preßvorgang wird dann jeweils nur eine räumlich zusammenhängende, dem Andrückbereich entsprechende Gruppe von Abstandhalterteilen ineinander eingerastet. Nach dem Einrastvorgang werden der Preßrahmen zurückgefahren, die Einzelplatten um ein entsprechendes Stück in y-Richtung bewegt, so daß im Bereich des Andrückbereiches noch nicht eingerastete Abstandhalterteile liegen, und dann wird erneut gedrückt. Die zur Verschiebung der Einzelplatten notwendige Verschiebungseinrichtung weist ein im Fußbereich der Einzelplatten angeordnetes Förderband auf, das die Einzelplatten computergesteuert um entsprechende Strecken in y-Richtung bewegt.

Die eigentliche(n) Andrückeinrichtung(en) ist in Fig. 5 nicht näher dargestellt. Sie ist zweckmäßigerweise den Preßrahmen 54, 55 zugeordnet, wobei vorzugsweise nur einer dieser beiden Preßrahmen mindestens eine Andrückeinrichtung aufweist. Dementsprechend wird auch nur eine der Einzelplatten bzw. Teile dieser einen Einzelplatte gegen die andere Einzelplatte bzw. deren Teile gepreßt und dadurch die entsprechenden Abstandhalterteile miteinander verrastet. Wie bereits beschrieben, können in dem betreffenden Preßrahmen mehrere "Druckplatten" vorgesehen sein, die einzeln oder in Kombination miteinander mit Druck beaufschlagbar sind. Die Druckbeaufschlagung jeder Druckplatte kann dabei vorzugsweise pneumatisch, insbesondere über mindestens einen Luftbalgzylinder erfolgen. Sind beispielsweise dem als "Presse" dienenden Preßrahmen zwölf Druckplatten zugeordnet, so können von diesen zwölf Druckplatten entweder alle oder nur diejenigen, die für das betreffende Plattenpaar erforderlich oder zweckmäßig sind, betätigt werden. Diese Betätigung kann selbstverständlich über eine zentrale Steuerung, ggf. insbesondere auch nach CAD-Vorgabe, erfolgen, wobei beispielsweise die Abmessungen des zu verpressenden Plattenpaares erfaßt und auch ggf. Bereiche, die zweckmäßigerweise nicht mit Druck beaufschlagt werden sollten (z.B. Bereiche mit bereits eingesetzten Fensterelementen), berücksichtigt werden können. Anstelle von Luftbalgzylindern können zur pneumatischen Druckbeaufschlagung auch Druckkissen verwendet werden.

## Patentansprüche

1. Verfahren zur Herstellung von Bauteilen aus Einzelplatten und Abstandhalten, insbesondere doppelwandigen Bauteilen, wie verlorenen Schalungen, insbesondere aus Holzwerkstoffplatten, mit folgenden Schritten:
Erzeugung mindestens einer Schnittfläche an mindestens einer vorgegebenen Einzelplatte nach Vorgabe mittels einer über mehrere Parameter computergesteuert bewegbaren Säge- und/oder Fräsvorrichtung, wobei bzgl. eines Koordinatensystemes mit
x : erste Richtung parallel zu einer Plattenoberflache
y : zweite Richtung parallel zur Plattenoberflache und senkrecht zur ersten Richtung
z : dritte Richtung senkrecht zur Plattenoberfläche
nach Maßgabe folgender Parameter gesteuert wird:
A : (x,y)-Koordinaten des Anfangspunktes einer Schnitt-Linie zwischen Schnittfläche und Plattenoberfläche
E : (x,y)-Koordinaten des Endpunktes der Schnittlinie zwischen Schnittfläche und Plattenoberfläche
N : (x,y,z)-Koordinaten einer Schnittflächennormalen,
und durch die Befestigung von Abstandhalterteilen mittels einer programmgesteuerten Bestückungsvorrichtung an einer Plattenoberfläche der Einzelplatte nach einer nach Vorgabe erfolgenden Verteilung derart, daß einander zuordenbare, mit Abstandhalterteilen versehene Einzelplatten unter Verbindung einander entsprechender komplementärer Abstandhalterteile zusammensetzbar sind.

2. Verfahren nach Anspruch 1, dadurch gekennzeichnet, daß zusätzlich nach Maßgabe eines weiteren Parameters gesteuert wird, nämlich
T : Betrag eines in der Schnittfläche senkrecht zur Schnittlinie A-E verlaufenden Schnittiefenvektors.

3. Verfahren nach Anspruch 1 oder Anspruch 2, dadurch gekennzeichnet, daß es sich bei der Vorgabe um eine CAD-Vorgabe handelt.

4. Verfahren nach einem der vorhergehenden Ansprüche, dadurch gekennzeichnet, daß die Einzelplatte gegenüber der Senkrechten geneigt gehalten wird, wobei der Neigungswinkel zwischen der Senkrechten und der x-y-Ebene zwischen 1 und 25°, insbesondere zwischen 5 und 15°, vorzugsweise etwa 10° beträgt.

5. Verfahren nach einem der vorhergehenden Ansprüche, dadurch gekennzeichnet, daß bei der Erzeugung der Schnittfläche Störbereiche, beispielsweise die Bereiche von Lagerelementen für die Einzelplatte, derart berücksichtigt werden, daß bei Verlauf der zu erzeugenden Schnittfläche durch einen Störbereich die Einzelplatte relativ zu dem Störbereich, vorzugsweise parallel zur x-y-Ebene, verschoben wird und daß die Verschiebung durch eine entsprechende Verschiebung eines Koordinaten-Bezugspunktes für die Parameter berücksichtigt wird.

6. Verfahren nach einem der vorhergehenden Ansprüche, dadurch gekennzeichnet, daß einander komplementäre Abstandhalterteile an einander entsprechenden Positionen von einander zur Herstellung doppelwandiger Bauteile zuordenbaren Einzelplatten befestigt werden.

7. Verfahren nach Anspruch 6, dadurch gekennzeichnet, daß einander zugeordnete, mit Abstandhalterteiien versehene Einzelplatten unter Verbindung der einander entsprechenden komplementären Abstandhalterteile zusammengesetzt werden, wobei vorzugsweise die einander entsprechenden komplementären Abstandhalterteile ineinander einrasten.

8. Verfahren nach einem der vorhergehenden Ansprüche, dadurch gekennzeichnet, daß mindestens eines der komplementären Abstandhalterteile aus mehreren, insbesondere zwei, miteinander verbindbaren Anstandhalterelementen zusammengesetzt wird, insbesondere durch Einrasten eines Abstandhalterelementes in ein entsprechendes komplementäres Abstandhalterelement.

9. Verfahren nach einem der vorhergehenden Ansprüche, dadurch gekennzeichnet, daß mit komplementären Abstandhalterteilen versehene Einzelplatten zum Zusammensetzen aufeinander zu bewegt werden, bis alle komplementären Abstandhalterteile einander gegenüber in Verbindungsstellung, insbesondere, ohne ineinander einzurasten, in Einraststellung angeordnet sind, und daß dann Abstandhalter, vorzugsweise gruppenweise gleichzeitig, miteinander verbunden, insbesondere zum Einrasten gebracht werden.

10. Verfahren nach Anspruch 9, dadurch gekennzeichnet, daß die Abstandhalterteile jeweils in Gruppen, vorzugsweise mit im wesentlichen gleicher Kraft, zum Einrasten gebracht werden, wobei eine vorzugsweise räumlich zusammenhängende Gruppe einen Teil aller Abstandhalterteile der miteinander zu verrastenden Einzelplatten umfaßt, und daß die miteinander zu verrastenden Einzelplatten und die entsprechenden Andrückvorrichtungen relativ zueinander im wesentlichen parallel zur x-y-Ebene bewegt werden.

11. Verfahren nach einem der Ansprüche 7 bis 10, dadurch gekennzeichnet, daß beim Zusammensetzen die Einzelplatten aus einer gegenüber der Senkrechten geneigten Stellung durch eine synchronisierte Aufrichtbewegung in eine senkrechte Stellung, mit Anordnung der Einzelplatten gegenüber in Verbindungsstellung, gebracht werden.

12. Verfahren nach Anspruch 11, dadurch gekennzeichnet, daß die Aufrichtbewegung durch eine Kombination von beidseitig angeordneten Balgzylindern mit einer mechanischen Kulissenführung bewirkt wird.

13. Verfahren nach Anspruch 11 oder 12, dadurch gekennzeichnet, daß die Einzelplatten, insbesondere vor dem Aufrichten in die senkrechte Stellung in geneigter Stellung auf den durch die betreffenden Abstandhalterteile definierten Abstand beim Zusammensetzen gebracht werden, insbesondere durch eine elektromotorische Spindelverstellung.

14. Anlage zur Herstellung von Bauteilen aus Einzelplatten und Abstandhaltern, insbesondere doppelwandigen Bauteilen, wie verlorenen Schalungen, insbesondere aus Holzwerkstoffplatten, mit:
mindestens einer Zuschneidevorrichtung (1) zur Erzeugung mindestens einer Schnittfläche an mindestens einer vorgegebene Einzelplatte durch Sägen und/oder Fräsen;
mindestens einer wobei die Zuschneidevorrichtung Sägevorrichtung (10) mit mindestens einem Sägewerkzeug, und/oder
mindestens eine Fräsvorrichtung (10) mit mindestens einem Fräswerkzeug aufweist;
wobei das Sägewerkzeug und das Fräswerkzeug nach Vorgabe, insbesondere CAD-Vorgabe, über die Parameter A, E, N nach Anspruch 1 computergesteuert bewegbar sind; und mindestens einer programmgesteuerten Bestückungsvorrichtung (20) zur Befestigung einer Vielzahl von Abstandhalterteilen auf einer Plattenoberfläche mindestens einer Einzelplatte derart, daß einander zuordenbare, mit Abstandhalterteilen versehene Einzelplatten unter Verbindung einander entsprechender komplementärer Abstandhalterteile zusammensetzbar sind.

15. Anlage nach Anspruch 14, dadurch gekennzeichnet, daß das Sägewerkzeug und/oder das Fräswerkzeug nach Vorgabe, insbesondere CAD-Vorgabe, zusätzlich über den Parameter T nach Anspruch 2 computergesteuert bewegbar sind.

16. Anlage nach einem der Ansprüche 14 oder 15, dadurch gekennzeichnet, daß die Sägevorrichtung (10) und/oder die Fräsvorrichtung (10) parallel zur x-y-Ebene verfahrbar an einem Translationsträger eines Translationsgestells (7) angeordnet sind, wobei sie vorzugsweise an einem gemeinsamen Translationsträger angeordnet sind.

17. Anlage nach einem der Ansprüche 14 bis 16, dadurch gekennzeichnet, daß das Sägewerkzeug in eine schräg zur x-y-Ebene ausgerichtete Sägeebene schwenkbar ist und/oder um eine senkrecht zur x-y-Ebene verlaufende Drehachse drehbar und/oder um eine quer, insbesondere senkrecht zur Drehachse verlaufende Sägenschwenkachse schwenkbar in der Sägevorrichtung geführt ist.

18. Anlage nach einem der Ansprüche 14 bis 17, dadurch gekennzeichnet, daß das Sägewerkzeug mit der Sägeebene parallel zum Schnittiefenvektor in eine parallel zum Schnittiefenvektor verlaufende Eintauchrichtung linear beweglich geführt ist.

19. Anlage nach einem der Ansprüche 14 bis 18, dadurch gekennzeichnet, daß das Fräswerkzeug eine senkrecht zur x-y-Ebene und vorzugsweise auch schräg dazu ausrichtbare Fräswerkzeugdrehachse aufweist und/oder um eine quer, insbesondere senkrecht zur Fräswerkzeugdrehachse verlaufende Fräsenschwenkachse schwenkbar in der Fräsvorrichtung geführt ist.

20. Anlage nach einem der Ansprüche 14 bis 19, dadurch gekennzeichnet, daß das Fräswerkzeug mit der Fräswerkzeugdrehachse parallel zum Schnittiefenvektor in eine parallel zum Schnittiefenvektor verlaufende Eintauchrichtung linear beweglich geführt ist.

21. Anlage nach einem der Ansprüche 14 bis 20, dadurch gekennzeichnet, daß das Fräswerkzeug und das Sägewerkzeug derart zueinander angeordnet sind, daß die Fräswerkzeugdrehachse im wesentlichen, insbesondere parallel um den Radius des Fräswerkzeuges versetzt, in der Sägeebene liegt.

22. Anlage nach Anspruch 21, dadurch gekennzeichnet, daß das Fräswerkzeug und das Sägewerkzeug um eine gemeinsame, senkrecht zur Sägeebene und senkrecht zur Fräswerkzeugdrehachse verlaufende Schwenkachse vorzugsweise gemeinsam verschwenkbar angeordnet sind, und daß der der Schwenkachse abgewandte Endbereich des Fräswerkzeuges und die der Schwenkachse abgewandte Außenseite des Sägewerkzeuges im wesentlichen den gleichen radialen Abstand von der Schwenkachse aufweisen, wobei vorzugsweise die Fräswerkzeugdrehachse radial zur Schwenkachse verläuft.

23. Anlage nach einem der Ansprüche 14 bis 22, dadurch gekennzeichnet, daß der Zuschneidevorrichtung (1) mindestens eine, vorzugsweise auswechselbare, großflächige Auflage (4), insbesondere eine Holzwerkstoffplatte, zugeordnet ist, auf die die Einzelplatte (5) mit ihrer Plattenrückseite flächig auflegbar ist.

24. Anlage nach einem der Ansprüche 14 bis 23, dadurch gekennzeichnet, daß die Zuschneidevorrichtung (1) Mittel (8, 9) zur Bewegung der Einzelplatte relativ zur Zuschneidevorrichtung parallel zur x-y-Ebene, vorzugsweise in horizontaler Richtung, aufweist, wobei vorzugsweise die Einzelplatte nach Vorgabe, insbesondere CAD-Vorgabe, computergesteuert bewegbar ist.

25. Anlage nach einem der Ansprüche 14 bis 24, dadurch gekennzeichnet, daß die Bestückungsvorrichtung (20) mindestens einen, insbesondere CAD-abhängig parallel zur x-y-Ebene frei programmierbar bewegbaren Roboterkopf (27, 28) aufweist, der dazu eingerichtet ist, die Abstandhalterteile an der Einzelplatte zu befestigen.

26. Anlage nach Anspruch 25, dadurch gekennzeichnet, daß die Bestückungsvorrichtung (20) ein mit dem Roboterkopf (27) verfahrbares Andockmagazin (31) zur Aufnahme und Abgabe einer Vielzahl von Abstandhalterteilen und eine mit dem Andockmagazin (31) und dem Roboterkopf (27) zusammenarbeitende Zufuhreinrichtung (32) für die Zuführung der Abstandhalterteile zum Befestigungsort aufweist.

27. Anlage nach Anspruch 26, dadurch gekennzeichnet, daß das Andockmagazin (31) oberhalb des Roboterkopfes (27), vorzugsweise oberhalb der Einzelplatte (29), angeordnet ist und eine schwerkraftunterstützte Zufuhreinrichtung (32) vorgesehen ist.

28. Anlage nach einem der Ansprüche 14 bis 27, dadurch gekennzeichnet, daß der Bestückungsvorrichtung (20) mindestens ein Aufnahmebehälter (33) für die Aufnahme einer Vielzahl ggf. beliebig orientierter Abstandhalterteile, vorzugsweise mindestens eine vorzugsweise eine Rütteleinrichtung umfassende Ausrichtvorrichtung für eine geordnete Ausrichtung der Abstandhalterteile und mindestens eine die Abstandhalterteile dem Andockmagazin (31) zuführende Transporteinrichtung (34) zugeordnet ist.

29. Anlage nach einen der Ansprüche 14 bis 28, dadurch gekennzeichnet, daß der Bestückungsvorrichtung (20) nachgeschaltet eine, insbesondere eine zweite Zwischenspeichereinrichtung (40) mit einer Mehrzahl, insbesondere Vielzahl von Speicherplätzen zur Aufnahme von mit Abstandhalterteilen (42, 43) bestückten Einzelplatten vorgesehen ist.

30. Anlage nach Anspruch 29, dadurch gekennzeichnet, daß die zweite Zwischenspeichereinrichtung eine Aufnahmekapazität hat, die derart der Bestückungskapazität der Bestückungsvorrichtung angepaßt ist, daß für jede fertig bestückte Einzelplatte mindestens ein Speicherplatz frei ist.

31. Anlage nach Anspruch 29 oder 30, dadurch gekennzeichnet, daß der zweiten Zwischenspeichereinrichtung Montagemittel zur Anbringung von Bewehrungen, wie Bewehrungsmatten oder Gittertragern, an den Abstandhalterteilen, sowie ggf. Mittel zur Installation von Haustechnikelementen, wie Leerrohren, Rohren oder dergleichen, sowie ggf. weiterer Bauelemente, insbesondere Fenster- und/oder Türelemente zugeordnet sind.

32. Anlage nach einem der Ansprüche 14 bis 31, dadurch gekennzeichnet, daß mindestens eine Fügevorrichtung (50) zum Zusammensetzen von einander zugeordneten, mit Abstandhalterteilen (42, 43) versehenen Einzelplatten (51, 52) vorgesehen ist.

33. Anlage nach Anspruch 32, dadurch gekennzeichnet, daß die Fügevorrichtung (50) mindestens ein Paar relativ aufeinander zu bewegbarer Preßrahmen (54, 55) zur Aufnahme jeweils einer mit Abstandhalterteilen versehenen Einzelplatte aufweist, wobei mindestens einem der Preßrahmen mindestens eine ein Einrasten der zueinander ausgerichteten Abstandhalterteile ineinander bewirkende Andrückeinrichtung zugeordnet ist,

34. Anlage nach Anspruch 33, dadurch gekennzeichnet, daß die Andrückeinrichtung eine pneumatisch arbeitende Andrückeinrichtung ist.

35. Anlage nach Anspruch 33 oder 34, dadurch gekennzeichnet, daß die Andrückeinrichtung zur Ausübung eines im wesentlichen gleichmäßig über einen Andrückbereich wirkenden Druckes ausgebildet ist, wobei der Andrückbereich einem Teil der gesamten Fläche der Einzelplatte entspricht, und daß eine Verschiebungseinrichtung zur Erzeugung einer Relativbewegung zwischen Andrückeinrichtung und den Einzelplatten vorgesehen ist.

36. Anlage nach einem der Ansprüche 33 bis 35, dadurch gekennzeichnet, daß einem Preßrahmen mindestens zwei Andrückeinrichtungen, die einzeln oder wahlweise in Verbindung miteinander betätigbar sind, zugeordnet sind.

37. Anlage nach Anspruch 36, dadurch gekennzeichnet, daß jede Andrückeinrichtung eine Druckplatte aufweist, die pneumatisch, insbesondere über mindestens einen Luftbalgzylinder mit Druck beaufschlagbar ist.

38. Anlage nach einem der Ansprüche 33 bis 37, dadurch gekennzeichnet, daß eine Verriegelungseinrichtung (53), insbesondere eine Verriegelungsstange oder -bolzen zur gegenseitigen Festlegung der Preßrahmen vorgesehen ist.

39. Anlage nach einem der Ansprüche 14 bis 38, dadurch gekennzeichnet, daß zur Änderung der Transportrichtung der Einzelplatte in der Anlage mindestens eine eine Drehung der Einzelplatte um eine vertikale Achse bewirkende Drehvorrichtung vorgesehen ist, die vorzugsweise als Drehboden ausgebildet ist, auf dem eine die Einzelplatten tragende Vorrichtung steht.

## Claims

1. Method for the manufacture of components from single panels and spacers, particularly double-walled components, such as disposable shutterings, particularly from wooden material panels, having the following steps:
producing at least one area of cut on at least one predetermined single panel, after presetting, by means of a sawing and/or milling device movable in computer-controlled manner via several parameters, in which with respect to a coordinate system with:
x: first direction parallel to a panel surface,
y: second direction parallel to the panel surface and perpendicular to the first direction,
z: third direction perpendicular to the panel surface,
control takes place in accordance with the following parameters:
A: (x,y) coordinates of the starting point of a cutting line between the area of cut and panel surface,
E: (x,y) coordinates of the finishing point of the cutting line between area of cut and panel surface,
N: (x,y,z) coordinates of a cut area normal,
and by fixing spacer elements by means of a program-controlled fitting device to a surface of the individual panel in accordance with a distribution based on a presetting, so that mutually associatable single panels equipped with spacer elements can be assembled accompanied by the connection of mutually corresponding, complimentary spacer elements.

2. Method according to claim 1, characterized in that control additionally takes place in accordance with a further parameter, namely T: amount of a depth of cut vector in the area of cut perpendicular to the cutting line A-E.

3. Method according to claim 1 or 2, characterized in that the presetting is a CAD presetting.

4. Method according to one of the preceding claims, characterized in that the single panel is kept inclined with respect to the perpendicular, the inclination angle between the perpendicular and the x-y plane being between 1 and 25°, particularly between 5 and 15°, preferably approximately 10°.

5. Method according to one of the preceding claims, characterized in that on producing the area of cut interference areas, particularly the areas round bearing elements for the single panel, are taken into account in such a way that when the area of cut to be produced passes through an interference area the single panel is displaced relative to the interference area, preferably parallel to the x-y plane and the displacement is taken into account by a corresponding displacement of a coordinate reference point for the parameters.

6. Method according to one of the preceding claims, characterized in that complementary spacer elements are fixed to single panels at mutually corresponding positions for producing double-walled components.

7. Method according to claim 6, characterized in that mutually associated single panels provided with spacer elements are assembled, whilst connecting the corresponding, complementary spacer elements and preferably the corresponding, complementary spacer elements are locked together.

8. Method according to one of the preceding claims, characterized in that at least one of the complementary spacer elements is assembled from several, particularly two, interconnectable spacer portions, particularly by locking one spacer portion in a corresponding, complementary spacer portion.

9. Method according to one of the preceding claims, characterized in that single panels provided with complementary spacer elements are moved towards one another for assembly until all the complementary spacer elements face one another in the connection position and are in particular in the locking position, but without being locked together, and that then the spacers, preferably groupwise and simultaneously, are interconnected, particularly locked together.

10. Method according to claim 9, characterized in that the spacer elements, in each case in groups and preferably with a substantially identical force, are locked together and a preferably spatially cohesive group comprises part of all the spacer elements of the single panels to be locked together and that the single panels to be locked together and the corresponding pressing devices are moved relative to one another substantially parallel to the x-y plane.

11. Method according to one of the claims 7 to 10, characterized in that on assembly, the single panels are brought from a position inclined with respect to the vertical, by a synchronized raising movement, into a vertical position, the single panels being arranged facing one another in the connection position.

12. Method according to claim 11, characterized in that the raising movement is brought about by a combination of bilaterally positioned bellows cylinders with a mechanical link guide.

13. Method according to claim 11 or 12, characterized in that the single panels, particularly prior to raising into the vertical position, are brought in the inclined position, on assembly, to the spacing defined by the spacer elements and in particular using an electromotive spindle adjustment.

14. Installation for the manufacture of components from single panels and spacers, particularly double-walled components, such as disposable shutterings, particularly from wooden material panels with:
at least one cutting device (1) for producing at least one area of cut on at least one predetermined single panel by sawing and/or milling; in which the cutting device has at least one sawing device (10) with at least one sawing tool and/or
at least one milling device (10) with at least one milling tool, in which the sawing tool and the milling tool after presetting, particularly CAD presetting, via parameters A, E and N according to claim 1 are movable in computer-controlled manner, and at least one program-controlled fitting device (20) for fixing a plurality of spacer elements to a panel surface of at least one single panel in such a way that mutually associatable single panels, equipped with spacer elements, are assemblable accompanied by the connection of corresponding, complementary spacer elements.

15. Installation according to claim 14, characterized in that the sawing tool and/or milling tool, following presetting, particularly CAD presetting, are movable in computer-controlled manner additionally via parameter T according to claim 2.

16. Installation according to one of the claims 14 or 15, characterized in that the sawing device (10) and/or milling device (10) are displaceable parallel to the x-y plane on a translation carrier of a translation frame (7) and are preferably located on a common translation carrier.

17. Installation according to one of the claims 14 to 16, characterized in that the sawing tool is swivellable in a sawing plane oriented in inclined manner to the x-y plane and/or rotatable about a rotation axis perpendicular to the x-y plane and/or guided swivellably in the sawing device about a saw swivel axis running transversely, particularly perpendicularly to the rotation axis.

18. Installation according to one of the claims 14 to 17, characterized in that the sawing tool, with the sawing plane parallel to the depth of cut vector, is guided in a linearly movable manner in a sinking in direction parallel to the depth of cut vector.

19. Installation according to one of the claims 14 to 18, characterized in that the milling tool has a milling tool rotation axis perpendicular to the x-y plane and preferably also orientable inclined thereto and/or is swivellably guided in the milling device about a milling cutter swivel axis positioned transversely, particularly vertically to the milling tool rotation axis.

20. Installation according to one of the claims 14 to 19, characterized in that the milling tool with the milling tool rotation axis parallel to the depth of cut vector is guided in linearly movable manner in a sinking in direction parallel to said vector.

21. Installation according to one of the claims 14 to 20, characterized in that the milling tool and sawing tool are so mutually arranged that the milling tool rotation axis is substantially in the sawing plane, particularly displaced in parallel about the milling tool radius.

22. Installation according to claim 21, characterized in that the milling tool and sawing tool are preferably jointly swivellably arranged about a swivel axis running perpendicular to the sawing plane and perpendicular to the milling tool rotation axis and that the end region of the milling tool remote from the swivel axis and the outside of the sawing tool remote from the swivel axis have substantially the same radial spacing from the swivel axis and preferably the milling tool rotation axis is directed radially to the swivel axis.

23. Installation according to one of the claims 14 to 22, characterized in that the cutting device (1) has at least one, preferably replaceable, large-area support (4), particularly a wooden material panel, on which the single panel (5) can be placed flat by its back.

24. Installation according to one of the claims 14 to 23, characterized in that the cutting device (1) has means (8, 9) for moving the single panel relative to the cutting device parallel to the x-y plane, preferably horizontally and preferably the single panel, after presetting, particularly CAD presetting, is movable in computer-controlled manner.

25. Installation according to one of the claims 14 to 24, characterized in that the fitting device (20) has at least one robot head (27, 28) movable in freely programmable manner parallel to the x-y plane, in particular in CAD-dependent manner and which serves to fix the spacer elements to the single panel.

26. Installation according to claim 25, characterized in that the fitting device (20) has a docking magazine (31) movable with the robot head (27) for receiving and supplying a plurality of spacer elements and a feed device (32), cooperating with the docking magazine (31) and robot head (27), for feeding the spacer elements to the fixing location.

27. Installation according to claim 26, characterized in that the docking magazine (31) is positioned above the robot head (27), preferably above the single panel (29) and a gravity-aided feed device (32) is provided.

28. Installation according to one of the claims 14 to 27, characterized in that with the fitting device (20) is associated at least one reception container (33) for receiving a plurality of optionally randomly oriented spacer elements, preferably at least one orienting device, preferably comprising a vibrating device, for an ordered orientation of the spacer elements and at least one transporting device (34) feeding the spacer elements to the docking magazine (31).

29. Installation according to one of the claims 14 to 28, characterized in that following the fitting device (20) is provided one, particularly a second intermediate storage device (40) with a plurality , in particular a multiplicity of storage locations for receiving single panels equipped with spacer elements (42, 43).

30. Installation according to claim 29, characterized in that the second intermediate storage device has a reception capacity, which is so adapted to the fitting capacity of the fitting device, that at least one storage location is free for each completely equipped single panel.

31. Installation according to claim 29 or 30, characterized in that the second intermediate storage device has assembly aids for fitting reinforcements, such as mesh reinforcements or lattice girders, to the spacer elements, as well as optionally means for installing house technology elements, such as empty pipes, pipes, etc., as well as optionally further components, particularly window and/or door elements.

32. Installation according to one of the claims 14 to 31, characterized in that at least one joining device (50) is provided for assembling mutually associated single panels (51, 52) equipped with spacer elements (42, 43).

33. Installation according to claim 32, characterized in that the joining device (50) has at least one pair of pressure frames (54, 55) movable relative to one another for the reception of in each case one single panel equipped with spacer elements and at least one of the pressure frames has associated with it at least one pressing device for locking together the mutually oriented spacer elements.

34. Installation according to claim 33, characterized in that the pressing device is a pneumatically operating pressing device.

35. Installation according to claim 33 or 34, characterized in that the pressing device is constructed for exerting a pressure acting substantially uniformly over a pressing area, to which corresponds part of the entire surface of the single panel and that a displacing device is provided for producing a relative movement between pressing device and single panels.

36. Installation according to one of the claims 33 to 35, characterized in that a pressure frame has associated with it at least two pressing devices, which can be operated singly or, as desired, in conjunction with one another.

37. Installation according to claim 36, characterized in that each pressing device has a pressure plate, which is pressurizable pneumatically, particularly via at least one air bellows cylinder.

38. Installation according to one of the claims 33 to 37, characterized in that a locking device (53), particularly a locking rod or bolt, is provided for the mutual fixing of the pressure frames.

39. Installation according to one of the claims 14 to 38, characterized in that for changing the transportation direction of the single panel in the installation, there is at least one rotating device rotating the single panel about a vertical axis and which is preferably constructed as a turntable, on which is located a device carrying the single panels.

## Revendications

1. Procédé de fabrication d'éléments de construction notamment à double paroi, tels que des coffrages perdus, à partir de panneaux individuels et d'écarteurs, notamment de panneaux en matériau dérivé du bois, comprenant les étapes suivantes :
production d'au moins une face de coupe sur au moins un panneau individuel prédéfini, d'après une consigne et au moyen d'un dispositif de sciage et/ou de fraisage pouvant être déplacé en étant commandé par ordinateur selon plusieurs paramètres, la commande s'effectuant, en référence à un système de coordonnées avec
x : première direction parallèle à une surface du panneau
y : deuxième direction parallèle à la surface du panneau et perpendiculaire à la première direction
z : troisième direction perpendiculaire à la surface du panneau,
en fonction des paramètres suivants :
A : coordonnées (x, y) du point initial d'une ligne de coupe entre la face de coupe et la surface du panneau
E : coordonnées (x, y) du point final de la ligne de coupe entre la face de coupe et la surface du panneau
N = coordonnées (x, y, z) d'une normale à la face de coupe ;
et fixation de parties d'écarteurs, au moyen d'un dispositif d'équipement commandé par programme, sur une surface du panneau individuel selon une répartition s'effectuant d'après une consigne, de telle sorte que des panneaux individuels mutuellement associables, pourvus de parties d'écarteurs, peuvent être réunis par I'assemblage de parties d'écarteurs complémentaires, mutuellement correspondantes.

2. Procédé selon la revendication 1, caractérisé en ce que la commande s'effectue en outre en fonction d'un paramètre supplémentaire, à savoir
T : valeur d'un vecteur de profondeur de coupe s'étendant dans la face de coupe perpendiculairement à la ligne de coupe A-E.

3. Procédé selon la revendication 1 ou 2, caractérisé en ce que la consigne est une consigne de CAO.

4. Procédé selon une des revendications précédentes, caractérisé en ce que le panneau individuel est maintenu incliné par rapport à la verticale, l'angle d'inclinaison entre la verticale et le plan x-y étant compris entre 1 et 25°, notamment entre 5 et 15°, et de préférence égal à environ 10°.

5. Procédé selon une des revendications précédentes, caractérisé en ce que, pour la production de la face de coupe, on tient compte de régions gênantes, par exemple les régions d'éléments de montage pour le panneau individuel, de telle sorte que, si la face de coupe à produire passe par une région gênante, le panneau individuel est décalé par rapport à la région gênante, de préférence parallèlement au plan x-y, et en ce qu'on tient compte du décalage par un décalage correspondant d'un point d'origine des coordonnées pour les paramètres.

6. Procédé selon une des revendications précédentes, caractérisé en ce que des parties d'écarteurs mutuellement complémentaires sont fixées à des positions mutuellement correspondantes de panneaux individuels mutuellement associables pour la fabrication d'éléments de construction à double paroi.

7. Procédé selon la revendication 6, caractérisé en ce que des panneaux individuels mutuellement associés, pourvus de parties d'écarteurs, sont réunis par l'assemblage des parties d'écarteurs complémentaires mutuellement correspondantes, les parties d'écarteurs complémentaires mutuellement correspondantes s'engageant de préférence l'une dans l'autre par enclenchement.

8. Procédé selon une des revendications précédentes, caractérisé en ce qu'au moins une des parties d'écarteurs complémentaires est composée de plusieurs, notamment de deux éléments écarteurs pouvant être mutuellement assemblés, notamment par enclenchement d'un élément écarteur dans un élément écarteur complémentaire correspondant.

9. Procédé selon une des revendications précédentes, caractérisé en ce que des panneaux individuels pourvus de parties d'écarteurs complémentaires sont, pour leur réunion, rapprochés jusqu'à ce que toutes les parties d'écarteurs complémentaires soient disposées en vis-à-vis en position d'assemblage, notamment, sans s'enclencher les unes dans les autres, en position d'enclenchement, et en ce que les écarteurs sont ensuite assemblés, notamment sont amenés en enclenchement, de préférence simultanément par groupes.

10. Procédé selon la revendication 9, caractérisé en ce que les parties d'écarteurs sont respectivement amenées en enclenchement par groupes, de préférence avec une force sensiblement identique, un groupe de préférence spatialement corrélé comprenant une partie de toutes les parties d'écarteurs des panneaux individuels à assembler entre eux par enclenchement, et en ce que les panneaux individuels à assembler entre eux par enclenchement et les dispositifs de pression correspondants peuvent être déplacés les uns par rapport aux autres sensiblement parallélement au plan x-y.

11. Procédé selon une des revendications 7 à 10, caractérisé en ce que, pour leur réunion, les panneaux individuels sont amenés d'une position inclinée par rapport à la verticale, par un mouvement synchronisé de redressement, dans une position verticale, avec disposition des panneaux individuels en vis-à-vis en position d'assemblage.

12. Procédé selon la revendication 11, caractérisé en ce que le mouvement de redressement est produit par une combinaison de vérins à soufflet, disposés de part et d'autre, avec un guide à coulisse mécanique.

13. Procédé selon la revendication 11 ou 12, caractérisé en ce que les panneaux individuels sont, notamment avant leur redressement dans la position verticale, amenés en position inclinée à l'écartement défini par les parties d'écarteurs concernées pour leur réunion, notamment par un déplacement de broche à moteur électrique.

14. Installation de fabrication d'éléments de construction notamment à double paroi, tels que des coffrages perdus, à partir de panneaux individuels et d'écarteurs, notamment de panneaux en matériau dérivé du bois, comprenant :
au moins un dispositif de coupe (1) pour produire par sciage et/ou par fraisage au moins une face de coupe sur au moins un panneau individuel prédéfini, le dispositif de coupe comprenant au moins un dispositif de sciage (10) pourvu d'au moins un outil de sciage, et/ou au moins un dispositif de fraisage (10) pourvu d'au moins un outil de fraisage, et l'outil de sciage et l'outil de fraisage pouvant être déplacés en étant commandés par ordinateur d'après une consigne, notamment une consigne de CAO, au moyen des paramètres A, E, N selon la revendication 1 ;
et au moins un dispositif d'équipement (20) commandé par ordinateur, pour la fixation d'une pluralité de parties d'écarteurs sur une surface d'au moins un panneau individuel de telle sorte que des panneaux individuels mutuellement associables, pourvus de parties d'écarteurs, peuvent être réunis par l'assemblage de parties d'écarteurs complémentaires, mutuellement correspondantes.

15. Installation selon la revendication 14, caractérisée en ce que l'outil de sciage et/ou l'outil de fraisage peuvent être déplacés en étant commandés par ordinateur d'après une consigne, notamment une consigne de CAO, au moyen en outre du paramètre T selon la revendication 2.

16. Installation selon la revendication 14 ou 15, caractérisée en ce que le dispositif de sciage (10) et/ou le dispositif de fraisage (10) sont disposés, à déplacement parallèlement au plan x-y, sur un support de translation d'un bâti de translation (7), lesdits dispositifs étant de préférence disposés sur un support de translation commun.

17. Installation selon une des revendications 14 à 16, caractérisée en ce que l'outil de sciage peut pivoter dans un plan de sciage orienté en oblique par rapport au plan x-y, et/ou est guidé dans le dispositif de sciage à rotation autour d'un axe de rotation s'étendant perpendiculairement au plan x-y, et/ou à pivotement autour d'un axe de pivotement de sciage s'étendant transversalement, notamment perpendiculairement à l'axe de rotation.

18. Installation selon une des revendications 14 à 17, caractérisée en ce que l'outil de sciage peut être guidé, avec le plan de sciage parallèle au vecteur de profondeur de coupe, en déplacement linéaire dans une direction d'enfoncement s'étendant parallèlement au vecteur de profondeur de coupe.

19. Installation selon une des revendications 14 à 18, caractérisée en ce que l'outil de fraisage présente un axe de rotation d'outil de fraisage pouvant être orienté perpendiculairement au plan x-y et de préférence également en oblique par rapport à ce plan, et/ou est guidé dans le dispositif de fraisage à pivotement autour d'un axe de pivotement de fraisage s'étendant transversalement, notamment perpendiculairement à l'axe de rotation d'outil de fraisage.

20. Installation selon une des revendications 14 à 19, caractérisée en ce que l'outil de fraisage peut être guidé, avec l'axe de rotation d'outil de fraisage parallèle au vecteur de profondeur de coupe, en déplacement linéaire dans une direction d'enfoncement s'étendant parallèlement au vecteur de profondeur de coupe.

21. Installation selon une des revendications 14 à 20, caractérisée en ce que l'outil de fraisage et l'outil de sciage sont disposés l'un par rapport à l'autre de telle sorte que l'axe de rotation d'outil de fraisage se trouve dans le plan de sciage en étant décalé, notamment parallélement, d'un montant sensiblement égal au rayon de l'outil de fraisage.

22. Installation selon la revendication 21, caractérisée en ce que l'outil de fraisage et l'outil de sciage sont disposés à pivotement, de préférence conjointement, autour d'un axe de pivotement commun s'étendant perpendiculairement au plan de sciage et perpendiculairement à l'axe de rotation d'outil de fraisage, et en ce que la région terminale de l'outil de fraisage qui est opposée à l'axe de pivotement et le côté extérieur de l'outil de sciage qui est opposé à l'axe de pivotement présentent sensiblement la même distance radiale de l'axe de pivotement, l'axe de rotation d'outil de fraisage s'étendant de préférence radialement à l'axe de pivotement.

23. Installation selon une des revendications 14 à 22, caractérisée en ce qu'au moins un appui (4) de grande surface, notamment un panneau en matériau dérivé du bois, de préférence échangeable, sur lequel le panneau individuel (5) peut être posé à plat par son côté arrière, est associé au dispositif de coupe (1).

24. Installation selon une des revendications 14 à 23, caractérisée en ce que le dispositif de coupe (1) présente des moyens (8, 9) pour déplacer le panneau individuel par rapport au dispositif de coupe parallèlement au plan x-y, de préférence en direction horizontale, le panneau individuel pouvant de préférence être déplacé en étant commandé par ordinateur d'après une consigne, notamment une consigne de CAO.

25. Installation selon une des revendications 14 à 24, caractérisée en ce que le dispositif d'équipement (20) présente au moins une tête de robot (27, 28) pouvant être déplacée de façon librement programmable parallèlement au plan x-y, notamment en fonction de la CAO, tête qui est conçue pour fixer les parties d'écarteurs sur le panneau individuel.

26. Installation selon la revendication 25, caractérisée en ce que le dispositif d'équipement (20) présente un magasin d'accouplement (31), pouvant être déplacé avec la tête de robot (27) et destiné à recevoir et délivrer une pluralité de parties d'écarteurs, et un dispositif d'alimentation (32), coopérant avec le magasin d'accouplement (31) et la tête de robot (27) et destiné à apporter les parties d'écarteurs au lieu de fixation.

27. Installation selon la revendication 26, caractérisée en ce que le magasin d'accouplement (31) est disposé au-dessus de la tête de robot (27), de préférence au-dessus du panneau individuel (29), et il est prévu un dispositif d'alimentation (32) se servant de la gravité.

28. Installation selon une des revendications 14 à 27, caractérisée en ce qu'au moins un récipient (33) est associé au dispositif d'équipement (20) pour recevoir une pluralité de parties d'écarteurs éventuellement orientées de façon quelconque, ainsi que, de préférence, au moins un dispositif d'orientation comprenant de préférence au moins un dispositif vibrant, pour une orientation ordonnée des parties d'écarteurs, et qu'au moins un dispositif de transport (34) apportant les parties d'écarteurs au magasin d'accouplement (31).

29. Installation selon une des revendications 14 à 28, caractérisée en ce que le dispositif d'équipement (20) est suivi d'un dispositif de stockage intermédiaire, notamment d'un deuxième dispositif de stockage intermédiaire (40), pourvu d'une pluralité, notamment d'une multiplicité de places de stockage, pour recevoir des panneaux individuels équipés de parties d'écarteurs (42, 43).

30. Installation selon la revendication 29, caractérisée en ce que le deuxième dispositif de stockage intermédiaire possède une capacité d'accueil qui est adaptée à la capacité d'équipement du dispositif d'équipement de telle sorte qu'au moins une place de stockage est disponible pour chaque panneau individuel complètement équipé.

31. Installation selon la revendication 29 ou 30, caractérisée en ce que des moyens de montage sont associés au deuxième dispositif de stockage intermédiaire pour fixer sur les parties d'écarteurs des armatures, par exemple des mats d'armature ou des supports de treillis, ainsi éventuellement que des moyens pour l'installation d'éléments techniques du bâtiment, tels que des gaines, des tubes ou analogues, ainsi éventuellement que d'autres éléments de construction, notamment des éléments de fenêtres et/ou de portes.

32. Installation selon une des revendications 14 à 31, caractérisée en ce qu'il est prévu au moins un dispositif d'assemblage (50) pour la réunion de panneaux individuels (51, 52) mutuellement associés, pourvus de parties d'écarteurs (42, 43).

33. Installation selon la revendication 32, caractérisée en ce que le dispositif d'assemblage (50) présente une paire de cadres presseurs (54, 55) pouvant être mutuellement rapprochés et destinés à recevoir chacun un panneau individuel pourvu de parties d'écarteurs, au moins un dispositif de pression, produisant un enclenchement mutuel des parties d'écarteurs mutuellement alignées, étant associé à au moins un des cadres presseurs.

34. Installation selon la revendication 33, caractérisée en ce que le dispositif de pression est un dispositif de pression fonctionnant de façon pneumatique.

35. Installation selon la revendication 33 ou 34, caractérisée en ce que le dispositif de pression est conçu pour exercer une pression agissant de façon sensiblement uniforme sur une région de pression, la région de pression correspondant à une partie de la surface totale du panneau individuel, et en ce qu'il est prévu un dispositif de translation pour produire un mouvement relatif entre le dispositif de pression et les panneaux individuels.

36. Installation selon une des revendications 33 à 35, caractérisée en ce qu'au moins deux dispositifs de pression, qui peuvent être actionnés individuellement ou, au choix, de façon conjointe, sont associés à un cadre presseur.

37. Installation selon la revendication 36, caractérisée en ce que chaque dispositif de pression présente une plaque de pression, qui peut être alimentée en pression de façon pneumatique, notamment au moyen d'au moins un vérin à soufflet pneumatique.

38. Installation selon une des revendications 33 à 37, caractérisée en ce qu'il est prévu un dispositif de verrouillage (53), notamment une tige ou un boulon de verrouillage pour fixer les cadres presseurs en position relative.

39. Installation selon une des revendications 14 à 38, caractérisée en ce qu'afin de modifier la direction de transport du panneau individuel dans l'installation, il est prévu au moins un dispositif de rotation produisant une rotation du panneau individuel autour d'un axe vertical, le dispositif de rotation étant de préférence réalisé sous forme de plancher tournant, sur lequel se dresse un dispositif portant les panneaux individuels.
